# EUROPEAN PATENT APPLICATION

(11) **EP 3 972 031 A1**
(43) Date of publication of application: **23.03.2022**
(21) Application number: 20804960.1
(22) Date of filing: 08.04.2020
(51) Int. Cl.: H01M 10/44, H01M 10/48, H02J 7/00, H02J 7/10, B60L 50/60, B60L 55/00, B60L 58/13, H02J 3/32, H02J 3/38, B60L 53/14, B60L 53/30, B60L 53/62, B60L 53/66

(54) **CHARGE/DISCHARGE DEVICE, CHARGE/DISCHARGE CONTROL METHOD, AND COMPUTER PROGRAM**

(30) Priority: 14.05.2019 JP 2019091635; 24.12.2019 JP 2019233543
(71) Applicant: Tsubakimoto Chain Co., Osaka 530-0005 (JP)
(72) Inventor: OKADA, Naoki, Osaka-shi, Osaka 530-0005 (JP); KOYAMA, Shingo, Osaka-shi, Osaka 530-0005 (JP)
(74) Representative: TBK
(86) International application number: PCT/JP2020/015758
(87) International publication number: WO 2020/230482

(57) **Abstract**

Provided are a charge/discharge device, a charge/discharge control method, and a computer program that exhibit high responsiveness while following a prescribed sequence that corresponds to a charge/discharge procedure. This charge/discharge device has a connector to an onboard power line connected to a storage battery provided in a vehicle, the charge/discharge device controlling charging and discharging in the storage battery, wherein the charge/discharge device comprises: a communication unit that establishes a communication connection with an onboard control device that switches on and off a vehicle-side relay interposed in the onboard power line; a communication control unit that exchanges messages with the onboard control device through the communication unit on the basis of a prescribed sequence; and a connection-standby-state-maintaining unit that maintains a connection standby state in which the vehicle-side relay remains on while the storage battery is not being charged or discharged after the vehicle-side relay has been switched on on the basis of the prescribed sequence.

## Description

### [Technical Field]

The present invention relates to a charge-discharge apparatus connected to a storage battery included in a vehicle, a charge-discharge control method, and a computer program.

### [Background Art]

Storage batteries included in electric vehicles have a relatively large capacity, e.g., a battery capacity of 5 to 100 kWh. Technologies have been proposed to use such electric power stored in the storage battery in electric vehicle for purposes other than driving electric vehicles. The purposes include to implement V2X including, for example, vehicle-to-home (V2H) for enabling supply of the electric power to homes, vehicle-to-building (V2B) for enabling supply of the electric power to buildings that are not always homes, and vehicle-to-grid (V2G) for enabling supply of the electric power to electric power grids. In the event of a power failure caused by a disaster, such technologies may be expected to supply electric power stored in movable electric vehicles so as to sustain life or keep factories operating. In implementing V2X, planned charging and discharging are desirably enabled under control from an energy management system (EMS).

Patent Document 1 relates to charge-discharge apparatuses for implementing V2H and discloses a charge-discharge apparatus that controls charging and discharging by grasping a connection between the charge-discharge apparatus and a vehicle without turning ON a charge-discharge apparatus side relay disposed on a power line connected to a storage battery of the vehicle.

Patent Document 2 discloses stopping charging upon occurrence of a hunting phenomenon in which a voltage from a commercial power supply drops and rises repeatedly, in order to protect an in-vehicle charge-discharge circuit including an AC-DC converter that adjusts electric power to be supplied to a storage battery provided in an electric vehicle.

### [Prior Art Document]

### [Patent Document]

[Patent Document 1] Japanese Patent No. 5642226
[Patent Document 2] Japanese Patent Application Laid-Open No. 2013-090459

### [Summary of Invention]

### [Problems to be Solved by Invention]

As disclosed in Patent Document 1, detection of a connection of the power line between the vehicle and the charge-discharge apparatus, establishment of a communication connection between the vehicle and the charge-discharge apparatus, and start and stop of charging and discharging are carried out safely in accordance with a predetermined sequence conforming to any of several charging and discharging methods. Charging and discharging control requires following a procedure conforming to the predetermined sequence, making it difficult to respond to a control instruction from an EMS that demands a fast response. Switching between charging and discharging operation and suspension requires switching ON and OFF a vehicle-side direct-current relay, a direct-current relay of a charge-discharge apparatus, and a parallel-off relay of the charge-discharge apparatus. When operating mode switching is performed repeatedly in accordance with fine control, the relays are turned ON and OFF frequently and are thus degraded, which may result in early breakage.

An object of the present invention is to provide a charge-discharge apparatus, a charging and discharging control method, and a computer program that achieve high responsivity while preventing or reducing degradation although a predetermined sequence conforming to a charging and discharging method is followed.

### [Means for Solving Problems]

A charge-discharge apparatus according to one embodiment of the present disclosure includes a connector with an in-vehicle power line for connection with a storage battery provided in a vehicle and controls charging and discharging of the storage battery. The charge-discharge apparatus comprises: a communication unit to establish a communication connection with an in-vehicle control device that switches ON and OFF a vehicle-side relay disposed on the in-vehicle power line; a communication control unit to transmit and receive messages to and from the in-vehicle control device through the communication unit in accordance with a predetermined sequence; and a connection standby state maintaining unit to maintain a connection standby state in which the vehicle-side relay remains ON even while neither charging nor discharging of the storage battery is carried out after the vehicle-side relay is switched ON in accordance with the predetermined sequence.

A charging and discharging control method according to one embodiment of the present disclosure, by which a charge-discharge apparatus including a connector with an in-vehicle power line for connection with a storage battery provided in a vehicle controls charging and discharging of the storage battery, performs the steps of: establishing a communication connection with an in-vehicle control device that switches ON and OFF a vehicle-side relay disposed on the in-vehicle power line; transmitting and receiving messages to and from the in-vehicle control device in accordance with a predetermined sequence; and maintaining a connection standby state while neither charging nor discharging of the storage battery is carried out after the vehicle-side relay is switched ON in accordance with the predetermined sequence, the vehicle-side relay being kept ON in the connection standby state.

A computer program according to one embodiment of the present disclosure, is a computer program for a computer installed on a charge-discharge apparatus including: a connector with an in-vehicle power line for connection with a storage battery provided in a vehicle; and a communication unit to establish a communication connection with an in-vehicle control device that switches ON and OFF a vehicle-side relay disposed on the in-vehicle power line. The computer program causes the computer to perform the steps of: transmitting and receiving messages to and from the in-vehicle control device through the communication unit in accordance with a predetermined sequence; and maintaining a connection standby state while neither charging nor discharging of the storage battery is carried out after the vehicle-side relay is switched ON in accordance with the predetermined sequence, the vehicle-side relay being kept ON in the connection standby state.

In one embodiment of the present disclosure, the vehicle-side relay is kept from being switched OFF under control exercised by the vehicle-side charge-discharge control device. If the relay on the in-vehicle power line is turned OFF, a procedure conforming to the predetermined sequence needs to be carried out again before start of charging or discharging, which will require time. Reducing the time required and keeping the vehicle-side relay ON makes it possible to provide a fast response for charging or discharging control.

A charge-discharge apparatus according to one embodiment of the present disclosure further comprises a charge-discharge circuit including an apparatus-side relay to switch ON and OFF transfer of electric power between the storage battery and a commercial power supply or a load, wherein the vehicle-side relay is ON and the relay of the charge-discharge circuit is OFF in the connection standby state.

In a charge-discharge apparatus according to one embodiment of the present disclosure, the relay of the charge-discharge circuit includes: a parallel-off relay to switch ON and OFF transfer of electric power to and from the commercial power supply; and an apparatus-side relay provided between the charge-discharge circuit and the connector. The parallel-off relay is OFF and the apparatus-side relay is ON in the connection standby state.

In one embodiment of the present disclosure, at least one of the relays provided in the charge-discharge apparatus is OFF in the connection standby state where the vehicle-side relay is kept ON. The apparatus-side relay disposed for connection of the charge-discharge circuit with the connector is kept ON in the same way as the vehicle-side relay. Minimizing the number of times the relays are to be switched ON or OFF makes it possible to cut down on electric power consumption and to prevent or reduce degradation of the relays. Alternatively, the parallel-off relay provided in the charge-discharge apparatus may also be kept ON. This makes it possible to provide a faster response.

In a charge-discharge apparatus according to one embodiment of the present disclosure, the connection standby state maintaining unit transmits, through the communication control unit, a message indicative of a charge-discharge current value to the in-vehicle control device while keeping the relay of the charge-discharge circuit OFF. The charge-discharge current value indicated in the message is a value substantially equal to a lower limit by which charging or discharging is determined to be in progress.

In one embodiment of the present disclosure, the in-vehicle control device is able to keep the vehicle-side relay ON, assuming that charging or discharging is in progress at a minimum current value.

In a charge-discharge apparatus according to one embodiment of the present disclosure, the connection standby state maintaining unit determines whether a state of charge of the storage battery is equal to or higher than a predetermined first state of charge by which the storage battery is determined to be fully charged, and if determining that the state of charge of the storage battery is equal to or higher than the first state of charge, the connection standby state maintaining unit transmits, to the in-vehicle control device, a message indicative of a discharge current value by which discharging is determined to be in progress.

In one embodiment of the present disclosure, when the storage battery of the vehicle is in a fully charged state, the in-vehicle control device is able to keep the vehicle-side relay ON, assuming that minimum discharging is being carried out.

In a charge-discharge apparatus according to one embodiment of the present disclosure, the connection standby state maintaining unit determines whether the state of charge of the storage battery is equal to or lower than a predetermined second state of charge by which the state of charge of the storage battery is determined to be at its lower limit, and if determining that the state of charge of the storage battery is equal to or higher than the second state of charge, the connection standby state maintaining unit turns ON the relay of the charge-discharge circuit and charges the storage battery with electric power from the commercial power supply until the state of charge of the storage battery reaches a predetermined third state of charge, and the connection standby state maintaining unit transmits a message indicative of a charge current value to the in-vehicle control device.

In one embodiment of the present disclosure, when the state of charge of the storage battery in the vehicle is empty (or at its lower limit), the in-vehicle control device is able to keep the vehicle-side relay ON, assuming that minimum charging is being carried out.

In a charge-discharge apparatus according to one embodiment of the present disclosure, the connection standby state maintaining unit turns OFF the vehicle-side relay and disconnects the communication connection established by the communication unit when at least one of the following conditions is satisfied: whether a predetermined time has elapsed from a time when the connection standby state maintaining unit started maintaining the connection standby state; whether a state of charge of the storage battery is equal to or lower than a predetermined second state of charge by which the state of charge is determined to be at its lower limit; and whether the state of charge of the storage battery has fallen by a predetermined ratio or a higher ratio after the connection standby state maintaining unit has started maintaining the connection standby state.

In one embodiment of the present disclosure, even if the charge-discharge apparatus and the vehicle are in the connection standby state where the vehicle-side relay is kept ON, the relay will be turned OFF and the communication connection will be disconnect when consumption of electric power remaining in the storage battery may continue because the charge-discharge apparatus and the vehicle are kept on standby for a long time. This enables the charge-discharge apparatus to operate suitably without maintaining the connection excessively.

A charge-discharge apparatus according to one embodiment of the present disclosure comprises a charge-discharge circuit including a relay to switch ON and OFF transfer of electric power between the storage battery and a commercial power supply or a load, wherein the connection standby state maintaining unit carries out charging or discharging with electric power set at its lower limit while keeping both of the vehicle-side relay and the relay of the charge-discharge circuit ON.

The relays provided in the charge-discharge apparatus may be kept ON. This makes it possible to provide a faster response. In this case, however, the connection standby state maintaining unit carries out charging or discharging with a minimum output. As used herein, the terms "lower limit" and "minimum" are not limited to zero but may refer to an output of, for example, 50 to 100 W.

A charge-discharge apparatus according to one embodiment of the present disclosure comprises an upper control communication unit to transfer data to and from an upper control device that provides an instruction for charging or discharging of the storage battery in the vehicle; and a determination unit to determine whether a transition is to be made to a protection state in accordance with: information on the storage battery obtained by the communication unit from the in-vehicle control device; and an instruction received by the upper control communication unit from the upper control device, the vehicle-side relay being protected in the protection state.

A charging and discharging method according to one embodiment of the present disclosure is a method by which a charge-discharge apparatus including a connector with an in-vehicle power line for connection with a storage battery provided in a vehicle controls charging and discharging of the storage battery. The method involves: establishing a communication connection with an in-vehicle control device that controls switching ON and OFF of a vehicle-side relay disposed on the in-vehicle power line; sending and receiving data to and from an upper control device that provides an instruction for charging or discharging of the storage battery in the vehicle; and determining, in accordance with information on the storage battery obtained from the in-vehicle control device through a communication therewith and an instruction received from the upper control device, whether a transition is to be made to a protection state where the relay is protected.

A computer program according to one embodiment of the present disclosure is a computer program for a computer installed on a charge-discharge apparatus including: a connector with an in-vehicle power line for connection with a storage battery provided in a vehicle; a first communication unit to establish a communication connection with an in-vehicle control device that switches ON and OFF a vehicle-side relay disposed on the in-vehicle power line; and a second communication unit to send and receive data to and from an upper control device. The computer program causes the computer to perform the steps of: obtaining, through the first communication unit, information on the storage battery from the in-vehicle control device; obtaining, through the second communication unit, an instruction for charging or discharging of the storage battery from the upper control device; and determining, in accordance with the information on the storage battery and the instruction from the upper control device, whether a transition is to be made to a protection state where the relay is protected.

In one embodiment of the present disclosure, a transition is made to the protection state when the relay of the vehicle is expected to be turned ON/OFF repeatedly owing to a discrepancy between information on the storage battery of the vehicle obtained from the in-vehicle control device through a communication therewith and an instruction from the upper control device (i.e., an EMS or a controller provided in the charge-discharge apparatus). In the protection state, the relay of the vehicle is prevented from being turned ON and OFF to the extent possible. In the protection state, the relay provided in the charge-discharge apparatus is also preferably controlled such that the relay is prevented from being turned ON and OFF to the extent possible.

In a charge-discharge apparatus according to one embodiment of the present disclosure, in the protection state, no response is made to a charging instruction or a discharging instruction from the upper control device, or a negative response is returned to the instruction.

In one embodiment of the present disclosure, the charge-discharge apparatus makes no response to an instruction provided for the vehicle from an EMS while the charge-discharge apparatus is in the protection state. When the charge-discharge apparatus is in the protection state and unable to follow an instruction from an EMS, the charge-discharge apparatus returns a negative response, such as a disallowing response or a negative acknowledge (NACK) response, to the EMS. The negative response indicates that an instruction is received but no response is made to the instruction. Given that the charge-discharge apparatus makes no response or returns the negative response, the upper control device, such as an EMS, may be able to assume that a control instruction being transmitted therefrom is unsuitable for the vehicle connected.

The charge-discharge apparatus according to one embodiment of the present disclosure transmits, through the second communication unit, a notification that a transition is made to the protection state.

When a transition is made to the protection state, the charge-discharge apparatus according to the present disclosure transmits, to an EMS, a notification that a transition is made to the protection state. Upon receiving the notification that a transition is made to the protection state, the EMS may be able to assume that a control instruction being transmitted therefrom is unsuitable for the vehicle connected.

The determination unit of the charge-discharge apparatus according to one embodiment of the present disclosure determines that a transition is to be made to the protection state upon receiving the same instruction repeatedly from the upper control device within a predetermined period.

Upon receiving the same instruction repeatedly from an EMS or an internal controller, the charge-discharge apparatus according to the present disclosure presumes that the instruction is inappropriate and the vehicle has performed no process responsive to the instruction, and assumes that the same instruction will be repeated thereafter because no process is performed, thus determining that a transition is to be made to the determination.

The determination unit of the charge-discharge apparatus according to one embodiment of the present disclosure determines that a transition is to be made to the protection state when switching between a charging instruction and a discharging instruction from the upper control device is performed more than once within a predetermined period.

When instructions from an EMS or an internal controller are repeated more than once within a predetermined period if the instructions are different, the charge-discharge apparatus according to the present disclosure presumes that the instructions are unsuitable for the vehicle and the instructions will be further repeated, which will repeatedly switch ON and OFF the relay; thus, the determination unit determines that a transition is to be made to the protection state.

The determination unit of the charge-discharge apparatus according to one embodiment of the present disclosure determines that a transition is to be made to the protection state when the vehicle-side relay is switched OFF by the in-vehicle control device and the same instruction is received repeatedly.

When an instruction for charging or discharging is provided although charging or discharging is stopped under control exercised by the vehicle, the charge-discharge apparatus according to the present disclosure presumes that an instruction from an EMS or an internal controller is unsuitable for the vehicle and the instruction will be further repeated, which will repeatedly switch ON and OFF the relay; thus, the determination unit determines that a transition is to be made to the protection state.

The determination unit of the charge-discharge apparatus according to one embodiment of the present disclosure determines that a transition is to be made to the protection state upon receiving a charging instruction from the upper control device, with the state of charge of the storage battery being equal to or higher than a predetermined first ratio by which the storage battery is determined to be fully charged, or upon receiving a discharging instruction from the upper control device, with the state of charge of the storage battery being equal to or lower than a predetermined second ratio by which the state of charge is determined to be at its lower limit.

When an instruction for charging or discharging is provided although charging or discharging is stopped under control exercised by the vehicle, the charge-discharge apparatus according to the present disclosure presumes that an instruction from an EMS or an internal controller is unsuitable for the vehicle and the instruction will be further repeated, which will repeatedly switch ON and OFF the relay; thus, the determination unit determines that a transition is to be made to the protection state.

The determination unit of the charge-discharge apparatus according to one embodiment of the present disclosure obtains information on the vehicle type of the vehicle through the first communication unit, and determines whether a transition is to be made to the protection state based on a transition condition stored for each vehicle type.

The charge-discharge apparatus according to the present disclosure determines whether a transition is to be made to the protection state under the transition condition responsive to the vehicle type. The charge-discharge apparatus is thus able to suitably mediate between the details of charging and discharging control exercised by the vehicle and instructions from a variety of EMSs.

The determination unit of the charge-discharge apparatus according to one embodiment of the present disclosure determines that a return is to be made from the protection state after a lapse of a predetermined standby time from the transition to the protection state.

After the transition to the protection state, the charge-discharge apparatus according to the present disclosure may make a return from the protection state after a lapse of a predetermined standby time.

The determination unit of the charge-discharge apparatus according to one embodiment of the present disclosure determines that a return is to be made from the protection state when the state of charge of the storage battery obtained by the first communication unit is below the predetermined first ratio or when the state of charge of the storage battery is above the predetermined second ratio.

The charge-discharge apparatus according to the present disclosure makes a return from the protection state after having checked that the state of charge of the storage battery in the vehicle is returned to a level at which charging is possible or discharging is possible. The charge-discharge apparatus according to the present disclosure is thus able to prevent the relay from being switched ON and OFF repeatedly again.

After the transition to the protection state, the charge-discharge apparatus according to the present disclosure may make a return from the protection state upon receiving a resetting instruction. The resetting instruction is an instruction provided as a result of an operation performed through a user-operable interface or an instruction provided from the upper control device with which a communication connection is maintained.

### [Effects of the Invention]

The present disclosure maintains a connected state of an in-vehicle power line and eliminates the need to perform a sequence again, making it possible to achieve high responsivity to charging and discharging instructions.

### [Brief Description of Drawings]

FIG. 1 is a schematic diagram of charge-discharge apparatuses according to Embodiment 1 and EMSs.
FIG. 2 is a block diagram illustrating connection configuration of the charge-discharge apparatus and a vehicle according to Embodiment 1.
FIG. 3 is a graph schematically illustrating charging and discharging controlled by the EMS.
FIG. 4 is a flow chart illustrating an exemplary processing procedure to be performed by a control unit of the charge-discharge apparatus.
FIG. 5 is a flow chart illustrating the exemplary processing procedure to be performed by the control unit of the charge-discharge apparatus.
FIG. 6 is a flow chart illustrating an exemplary control procedure for maintaining a "connection standby state".
FIG. 7 is a flow chart illustrating an exemplary control procedure for making a state transition between the "connection standby state" and a "disconnection standby state".
FIG. 8 is a flow chart illustrating an exemplary procedure to be performed by the charge-discharge apparatus in making a transition to a protection state.
FIG. 9 is a flow chart illustrating the exemplary procedure to be performed by the charge-discharge apparatus in making a transition to the protection state.
FIG. 10 is a flow chart illustrating an exemplary processing procedure for determining whether a transition is to be made to the protection state.
FIG. 11 is a flow chart illustrating another exemplary processing procedure for determining whether a transition is to be made to the protection state.
FIG. 12 is a flow chart illustrating an exemplary processing procedure for making a return from the protection state.
FIG. 13 is a flow chart illustrating an exemplary procedure to be performed by a charge-discharge apparatus according to Embodiment 3 in making a transition to a protection state.
FIG. 14 is a flow chart illustrating the exemplary procedure to be performed by the charge-discharge apparatus according to Embodiment 3 in making a transition to the protection state.

### [Mode for Carrying out Invention]

The present disclosure will be described in detail with reference to the drawings illustrating embodiments thereof.

### Embodiment 1

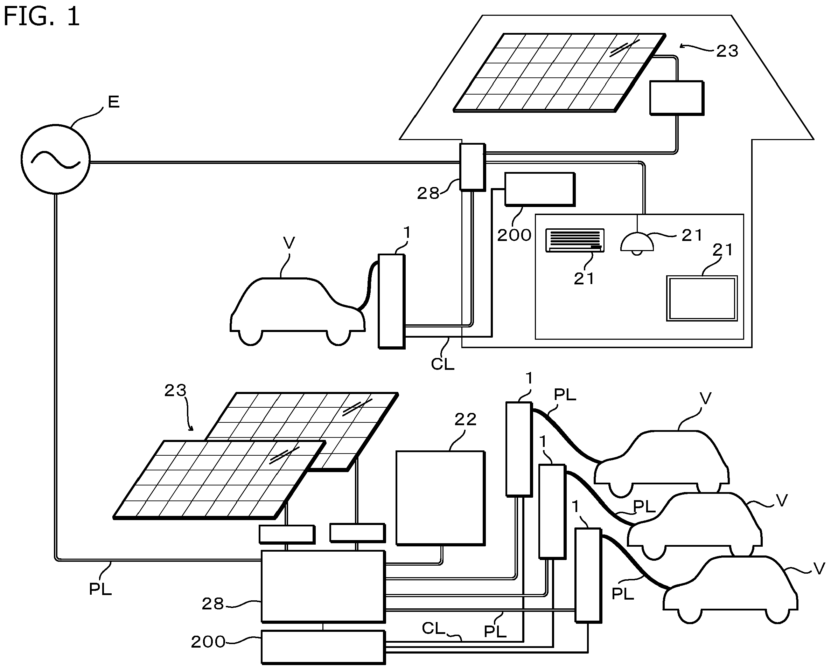

FIG. 1 is a schematic diagram of charge-discharge apparatuses 1 according to Embodiment 1 and EMSs 200. Loads 21 disposed in a home, a power generating apparatus 23, and the charge-discharge apparatus 1 are connected to each other with a power line PL through a distribution board 28. The EMS 200 is connected to the charge-discharge apparatus 1 through a communication line CL. The EMS 200 is connected to the power generating apparatus 23, the loads 21, and the distribution board 28 through signal lines or communication lines (not illustrated). Communication between the EMS 200 and the charge-discharge apparatus 1 does not necessarily have to be carried out through the communication line CL but may be wireless communication or may be power line communication carried out through the power line PL. The EMS 200 controls transfer of electric power among the loads 21, an electric power system E, the power generating apparatus 23, and a vehicle V. The EMS 200 may be replaced with a controller incorporated into the charge-discharge apparatus 1.

Another example of the EMS 200 controls transfer of electric power between: a storage battery 22 and the power generating apparatus 23 installed at a parking lot that is a public facility; and the vehicles V which are connected through the charge-discharge apparatuses 1; and the electric power system E. The electric power system E in this example is connected to the storage battery 22, the power generating apparatus 23, and the charge-discharge apparatuses 1 with the power lines PL through the distribution board 28. The EMS 200 in this example is connected to the charge-discharge apparatuses 1 with the communication lines CL. The EMS 200 is connected to the storage battery 22, the power generating apparatus 23, and the distribution board 28 with signal lines or communication lines (not illustrated). More than one electric power system E, more than one storage battery 22, more than one power generating apparatus 23, more than one charge-discharge apparatus 1, and more than one load 21 may be connected to build a large-scale grid system.

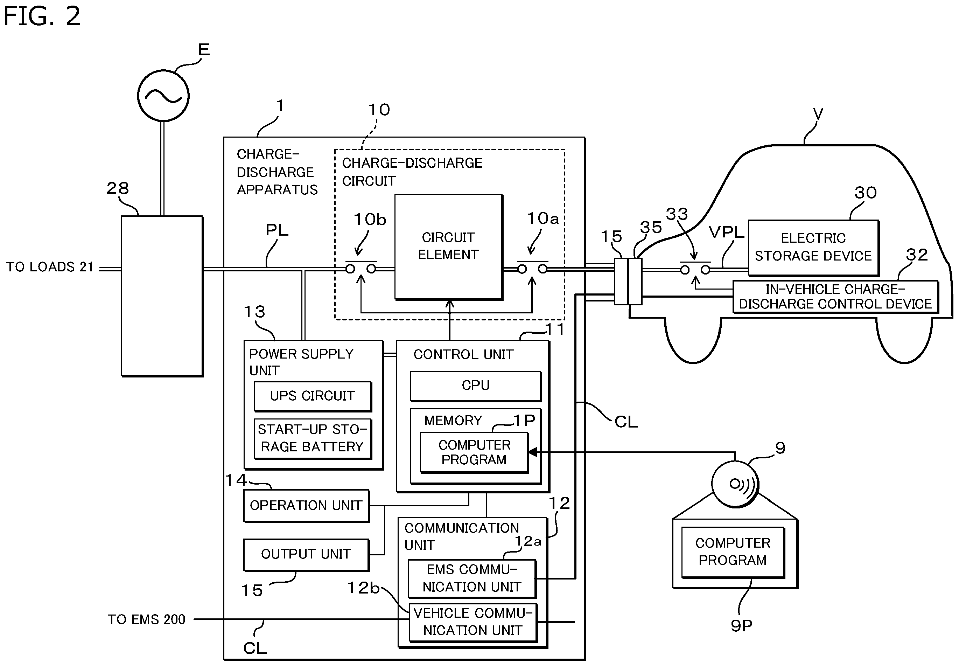

FIG. 2 is a block diagram illustrating how the charge-discharge apparatus 1 according to Embodiment 1 and the vehicle V are connected. The vehicle V is an electric vehicle (EV), a hybrid electric vehicle (HEV), a plug-in hybrid electric vehicle (PHEV), or a fuel cell vehicle (FCV). The vehicle V includes a large capacity electric storage device 30 usable for driving the vehicle V. The vehicle V includes: a connector 35 for a power line VPL connected to the electric storage device 30; and an in-vehicle charge-discharge control device 32 to control charging and discharging of the electric storage device 30. The power line VPL is provided with a DC relay 33 included in a charge-discharge circuit of the vehicle V. The in-vehicle charge-discharge control device 32 controls ON and OFF of the DC relay 33. The connector 35 includes a communication terminal for a communication connection with the in-vehicle charge-discharge control device 32.

The charge-discharge apparatus 1 includes a charge-discharge circuit 10, a control unit 11, a communication unit 12, a power supply unit 13, an operation unit 14, and an output unit 15. The charge-discharge circuit 10 includes diverse circuit elements, such as a bidirectional inverter and various relays. The charge-discharge circuit 10 includes: a DC relay 10a connected to a connector 15 for connection with the vehicle V; and a parallel-off relay 10b disposed between the power line PL leading to the EMS 200, the power supply unit 13, and itself. The charge-discharge circuit 10 is connected to the connector 15 with the power line PL through the DC relay 10a.

The control unit 11 controls the circuit elements, which are included in the charge-discharge circuit 10, so as to control charging and discharging switching, a current amount, and a voltage amount of the electric storage device 30 of the vehicle V. The control unit 11 includes a central processing unit (CPU) and a nonvolatile memory. The CPU performs a control process in accordance with a computer program 1P stored in the nonvolatile memory so as to control the charge-discharge circuit 10. The computer program 1P may be a computer program 9P stored in a computer-readable storage medium 9, read by the CPU, and then stored in the memory.

The communication unit 12 includes a vehicle communication unit 12a and an EMS communication unit 12b. The vehicle communication unit 12a is able to establish a communication connection with the in-vehicle charge-discharge control device 32 through the connector 15 and the connector 35. The vehicle communication unit 12a should comply with a charging and discharging system adaptable to the vehicle V and the connectors 15 and 35. The vehicle communication unit 12a may establish selectively communication connections in compliance with more than one protocol so as to be adaptable to different charging and discharging systems. In Embodiment 1, the vehicle communication unit 12a communicates with the in-vehicle charge-discharge control device 32 through a controller area network (CAN). The vehicle communication unit 12a may establish communication by using PLC.

The EMS communication unit 12b establishes communication with the EMS 200 through the communication line CL. The EMS communication unit 12b may be, for example, a communication module adaptable to the communication line CL compliant with Ethernet (registered trademark) or a communication module adaptable to the communication line CL compliant with ECHONET/ECHONETLite (registered trademark). The EMS communication unit 12b may establish communication by using PLC.

The power supply unit 13 includes an uninterruptible power systems (UPS) circuit and a start-up storage battery and supplies electric power to the control unit 11. In the event of a power failure, the power supply unit 13 supplies, from the start-up storage battery, electric power necessary for the start-up of the charge-discharge apparatus 1. The power supply unit 13 may charge the start-up storage battery with electric power supplied from the electric power system E, the power generating apparatus 23, or the vehicle V.

The operation unit 14 includes a display, a touch screen incorporated into the display, and a physical button. The operation unit 14 is exposed to the exterior of the charge-discharge apparatus 1 and receives operations including START (start-up) and STOP (end) operations performed by a user. The control unit 11 may control the charge-discharge circuit 10 in accordance with the operation(s) received by the operation unit 14.

The output unit 15 employs a display. The output unit 15 includes a segment display. The output unit 15 outputs a character or an image under control exercised by the control unit 11. An alternative to the output unit 15 may employ a display of an information terminal device, such as a smartphone or a tablet terminal, which is able to establish a wireless communication connection with the EMS communication unit 12b. In this case, the information terminal device establishes a wireless communication connection with the charge-discharge apparatus 1 and is able to present a screen including a character or an image output from the control unit 11. The output unit 15 may employ an LED or a lamp and may output light that is turned on/off or blinked in a pattern responsive to an instruction from the control unit 11. The output unit 15 may employ a speaker and may output a stored beep sound in response to an instruction from the control unit 11. The output unit 15 may employ a combination of a display, an LED, and a speaker.

As illustrated in FIGS. 1 and 2, the charge-discharge circuit 10 of the charge-discharge apparatus 1 configured as described above is connected to the electric storage device 30 of the vehicle V with the power line PL through the DC relay 10a and the DC relay 33 for the vehicle V, with the connector 15 connected to the connector 35 of the vehicle V. As illustrated in FIGS. 1 and 2, the charge-discharge circuit 10 is connected to the EMS 200, the electric power system E, and the loads 21 with the power line PL through the parallel-off relay 10b and the distribution board 28. In accordance with control exercised by the EMS 200, the charge-discharge apparatus 1 controls transfer of electric power among the electric storage device 30, the EMS 200, the electric power system E, and the loads 21. When all of the parallel-off relay 10b, the DC relay 10a, and the DC relay 33 are in an ON state, the charge-discharge circuit 10 is able to discharge electric power of the electric storage device 30 to the loads 21 or charge the electric storage device 30 with electric power supplied from the electric power system E through the power line PL.

The control unit 11 of the charge-discharge apparatus 1 transmits and receives information to and from the in-vehicle charge-discharge control device 32 and the EMS 200 through the communication unit 12 so as to control the charge-discharge circuit 10. The control unit 11 controls charging and discharging between the vehicle V and the electric power system E, the loads 21, the storage battery 22 or the power generating apparatus 23 in response to an instruction from the EMS 200 to which a notification that the vehicle V is connected has been provided from the charge-discharge apparatus 1.

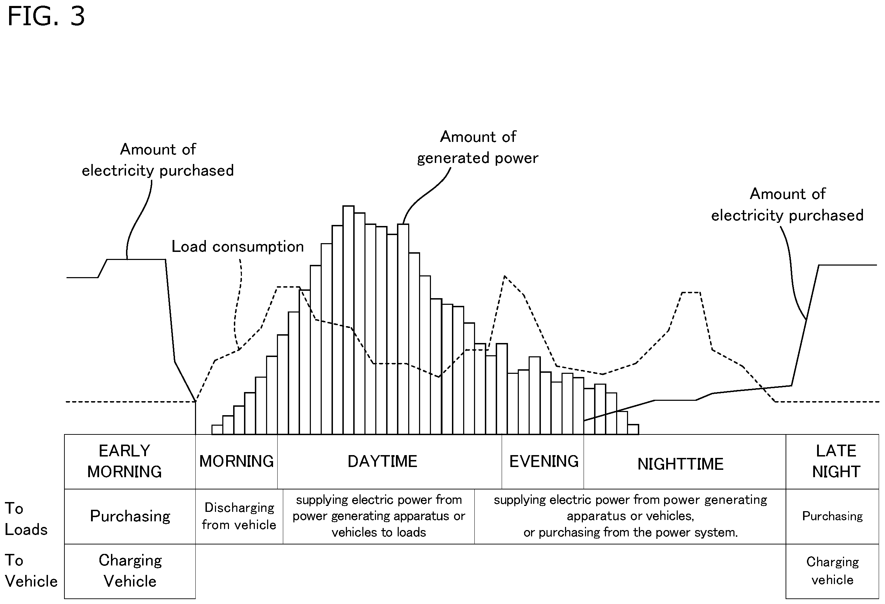

FIG. 3 is a graph schematically illustrating charging and discharging controlled by the EMS 200. The horizontal axis in FIG. 3 represents a lapse of time on a day-to-day basis, and the graph indicates electric power consumed by the loads 21, the amount of power generated by the power generating apparatus 23, and the charged and discharged state of the electric storage device 30 of the vehicle V.

As illustrated in FIG. 3, the EMS 200 exercises schedule control such that the electric storage device 30 of the vehicle V is charged with electric power from the electric power system E, for example, during nighttime hours for which the price of electricity to be purchased from the electric power system E is set at a low level. The EMS 200 may carry out charging in accordance with a running schedule. The EMS 200 supplies electric power from the electric storage device 30 of the vehicle V, which has been charged during nighttime hours, to the load(s) 21 during daytime hours for which the price of electricity to be purchased from the electric power system E is set at a high level. The EMS 200 may rectify electric power from the power generating apparatus 23 capable of generating power from sunlight and may supply it to the load(s) 21, and also may supply electric power from the electric storage device 30 to the load(s) 21 over a period of time during which the amount of power generated by the power generating apparatus 23 is temporarily insufficient.

In particular, during charging and discharging control that involves supplying electric power from the electric storage device 30 of the vehicle V to the load(s) 21, the EMS 200 requests the charge-discharge apparatus 1 to start or suspend supply of electric power from the electric storage device 30 of the vehicle V or to adjust, in accordance with operation(s) of the load(s) 21, the amount of electric power to be supplied thereto. In response to an instruction from the EMS 200, the charge-discharge apparatus 1 may frequently start or stop discharging from the electric storage device 30. If connection sequences which requires a few or several seconds with the electric storage device 30 and the in-vehicle charge-discharge control device 32 of the vehicle V are performed for each an adjustment, charging and discharging responsivity to an instruction will be low, making it impossible to cope with variations in the operation(s) of the load(s) 21. Accordingly, the charge-discharge apparatus 1 according to the present disclosure enhances responsivity to an instruction from the EMS 200 by exercising control described below.

A processing procedure to be performed by the control unit 11 of the charge-discharge apparatus 1 will be described below. The following description is based on the assumption that the vehicle V remains connected to the charge-discharge apparatus 1 through the connector 15 and the connector 35 as previously mentioned.

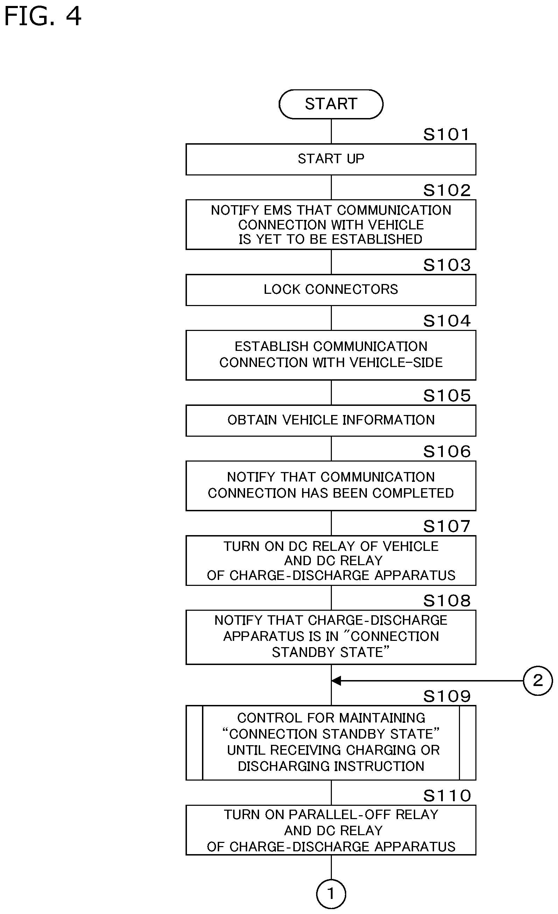

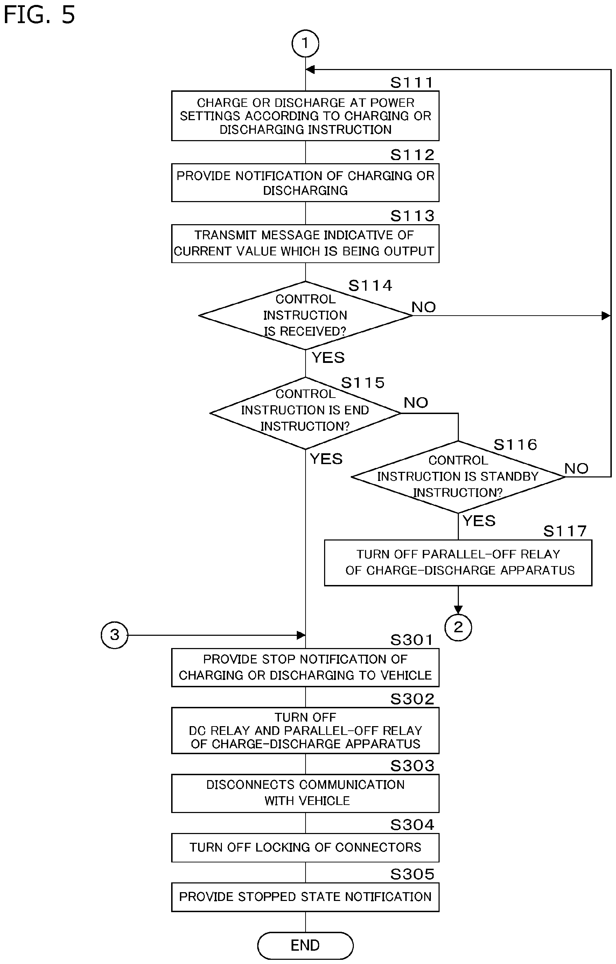

FIGS. 4 and 5 are flow charts illustrating an exemplary processing procedure to be performed by the control unit 11 of the charge-discharge apparatus 1.

The control unit 11 starts up the charge-discharge apparatus 1 upon receiving a start-up instruction from the EMS 200, an instruction from the operation unit 14, or scheduled start of electric power supply from the power supply unit 13 (step S101), and then notifies the EMS 200 that a communication connection with the vehicle V is yet to be established (step S102).

The control unit 11 performs a predetermined connection sequence so as to turn ON the locking of the connector 15 and the connector 35 (step S103) and establish a communication connection with the in-vehicle charge-discharge control device 32 through the vehicle communication unit 12a (step S104). Upon establishing the communication connection, the control unit 11 obtains vehicle information on the vehicle V from the in-vehicle charge-discharge control device 32 (step S105). The vehicle information obtained in step S105 includes identification data, a vehicle type, a charging capacity, and a state of charge (SOC) of the vehicle V. Examples of the vehicle type include an EV, an HEV, a PHEV, and an FCV. When the vehicle type is an FCV, the vehicle V is a vehicle dedicated to discharging. If the vehicle type is an EV, an HEV, or a PHEV, the vehicle V may be chargeable only.

The control unit 11 provides, to the EMS 200, a notification that the communication connection with the vehicle V has been completed (step S106). The notification that the connection with the vehicle V has been completed includes chargeable or dischargeable electric power determined in accordance with the charging capacity and the state of charge.

The control unit 11 performs a connection sequence with the in-vehicle charge-discharge control device 32 and the electric storage device 30 so as to turn ON the DC relay 10a for the charge-discharge apparatus 1 and the DC relay 33 for the vehicle V (step S107).

The control unit 11 provides, to the EMS 200, a notification that the charge-discharge apparatus 1 is in a "connection standby state" in which charging or discharging is allowed to start and an output is changeable at a desired timing while the DC relay 33 of the vehicle V is kept ON (step S108). In the "connection standby state", the control unit 11 gate-blocks the inverter in the charge-discharge circuit 10, and turns OFF at least the parallel-off relay 10b. In the "connection standby state" according to Embodiment 1, the control unit 11 controls ON/OFF of the DC relay 10a of the charge-discharge circuit 10 in the same way as the DC relay 33 for the vehicle V.

In step S108, the control unit 11 may output a notification from the output unit 15 to the user that the charge-discharge apparatus 1 is in the "connection standby state". A format of outputting the notification may be any of: presentation of text on the output unit 15; presentation of text or an image on the user's information terminal device; turning on/off or blinking of the LED or lamp of the output unit 15 in a predetermined pattern; and output of a sound from the speaker of the output unit 15.

The control unit 11 exercises control for maintaining the "connection standby state" until receiving a charging or discharging instruction (step S109). The control for maintaining the "connection standby state" will be described in detail below.

The control unit 11 subsequently turns ON the parallel-off relay 10b of the charge-discharge circuit 10, which is a relay for the charge-discharge apparatus 1, while keeping the DC relay 10a in an ON state (step S110). The control unit 11 starts or continues charging or discharging in accordance with electric power settings for which an instruction is provided from the EMS 200 or the operation unit 14 (step S111). When the electric storage device 30 is being charged with minimum electric power in the "connection standby state" in step S111, the control unit 11 may skip switching ON the parallel-off relay 10b.

The control unit 11 provides a notification that the electric storage device 30 is being charged or discharged to the EMS 200 through the EMS communication unit 12b (step S112). The control unit 11 transmits a message indicative of a current value (e.g., a discharging current value or a charging current value) which is being output, through the vehicle communication unit 12a (step S113).

The control unit 11 determines whether a control instruction has been received from the EMS 200 or the operation unit 14 (step S114). If determining that no control instruction has been received (S114: NO), the control unit 11 returns the process to step S111.

If determining that the control instruction has been received at step S114 (S114: YES), the control unit 11 determines whether the control instruction indicates the end of charging or discharging control, specifically whether the control instruction is an end instruction provided from the EMS 200 or a STOP operation performed through the operation unit 14 (step S115).

If determining that the control instruction does not indicate the end of charging or discharging control (S115: NO), the control unit 11 determines whether the control instruction is a standby instruction provided from the EMS 200 (step S116). If determining that the control instruction is a standby instruction (step S116: YES), the control unit 11 turns OFF the parallel-off relay 10b of the charge-discharge circuit 10, which is a relay for the charge-discharge apparatus 1, while keeping the DC relay 10a ON (step S117), and returns the process to step S109 so as to make a transition to the "connection standby state".

If determining that the control instruction is not a standby instruction (S116: NO), the control instruction is an instruction for electric power settings or charging and discharging switching, and the control unit 11 returns the process to step S111 and continues charging or discharging in accordance with the instruction.

If determining that the control instruction indicates the end of charging or discharging control at step 115 (S115: YES), the control unit 11 starts an end sequence, and provides a stop notification to the in-vehicle charge-discharge control device 32 though the vehicle communication unit 12a (step S301). The control unit 11 turns OFF both of the DC relay 10a and the parallel-off relay 10b of the charge-discharge circuit 10, which are the apparatus-side relays of the charge-discharge apparatus 1 (step S302), and disconnects the communication with the vehicle V (step S303). The control unit 11 turns OFF the locking of the connector 15 and the connector 35 (step S304), provides a stopped state notification to the EMS 200 (step S305), and then ends the process. The control unit 11 may make a transition to a shutdown or a sleep state.

In the flow chart of FIG. 5, the timings for establishing and cutting off the communication connection with the in-vehicle charge-discharge control device 32 for the vehicle V and the timings for turning ON and OFF the locking of the connector 15 and the connector 35 are illustrated by way of example. Turning ON and OFF of the connector locking and communication control may be carried out in the order designed freely.

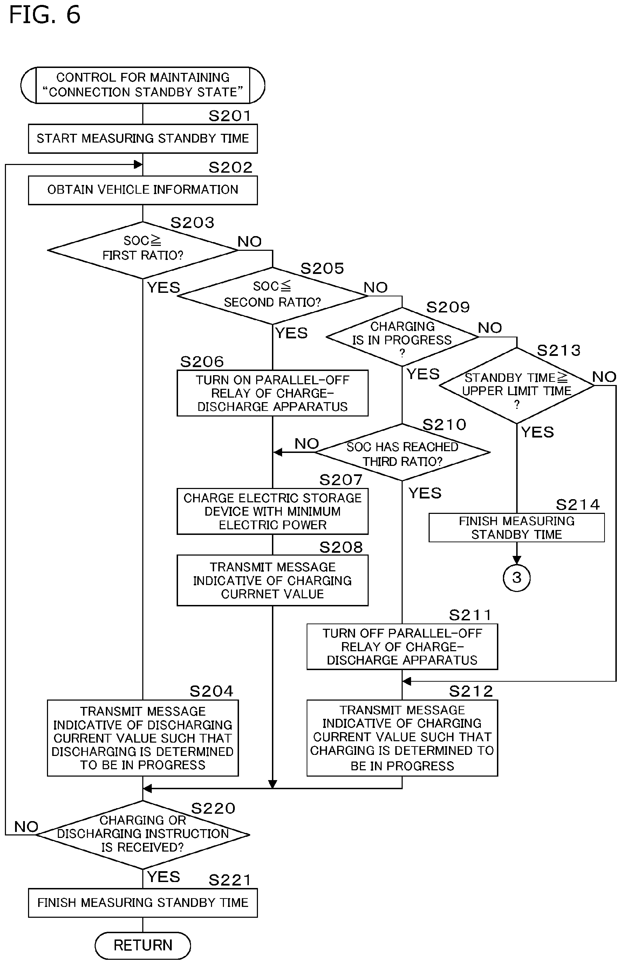

FIG. 6 is a flow chart illustrating an exemplary control procedure for maintaining the "connection standby state". The processing procedure illustrated in the flow chart of FIG. 6 corresponds to the details of the process of step S109 in the flow charts of FIGS. 4 and 5. Functions implemented by the process illustrated in the flow chart of FIG. 6 correspond to a "connection standby state maintaining unit".

The control unit 11 starts measuring a standby time for the "connection standby state" (step S201).

The control unit 11 obtains, from the in-vehicle charge-discharge control device 32, vehicle information including the state of charge of the electric storage device 30 (step S202), and determines whether the state of charge is equal to or higher than a first state of charge (step S203). The first state of charge is set for determining that the vehicle V does not allow charging and for turning OFF the DC relay 33. The first state of charge is, for example, 95%, which is close to a fully charged state.

If determining that the state of charge is equal to or higher than the first state of charge (S203: YES), the control unit 11 transmits, to the in-vehicle charge-discharge control device 32, a message indicative of a minimum discharging current value by which discharging is determined to be in progress (step S204), and then moves the process to step S220. The discharging current value is, for example, 1A. In this case, the DC relay 33 for the vehicle V is maintained in the ON state but the parallel-off relay 10b of the charge-discharge circuit 10 in the charge-discharge apparatus 1 is not in the ON state, which means that no electric power is actually being discharged from the electric storage device 30 to the load(s) 21.

If determining that the state of charge is below the first state of charge at step S203 (S203: NO), the control unit 11 determines whether the state of charge is equal to or lower than a second state of charge (step S205). The second state of charge is set for determining that the vehicle V does not allow discharging and for turning OFF the DC relay 33. The second state of charge is, for example, 10%, which indicates that the amount of power remaining in a battery is low.

If determining that the state of charge is equal to or lower than the second state of charge at step S205(S205: YES), the control unit 11 turns ON the parallel-off relay 10b of the charge-discharge circuit 10, which is a relay for the charge-discharge apparatus 1 (step S206). Because the DC relay 10a remains in the ON state, the relays of the charge-discharge circuit 10 are both ON. In this case, the control unit 11 starts or continues charging the electric storage device 30 with minimum electric power (step S207). The control unit 11 transmits a message indicative of a charging current value to the in-vehicle charge-discharge control device 32 (step S208) and then moves the process to step S220.

A supply source of minimum electric power in step S207 is preferably the electric power system E. Charging to be carried out for full charging is undesirable during a time period for which the electricity purchase price is higher as illustrated in FIG. 3. During charging with minimum electric power mentioned above, the EMS 200 does not have to be notified of the state of charge.

If determining that the state of charge is above the second state of charge (S205: NO), the control unit 11 determines whether charging started in step S207 is in progress (step S209). If determining that charging is in progress (step S209: YES), the control unit 11 determines whether the state of charge has reached a third state of charge (step S210). The third state of charge is slightly higher than the second state of charge. The third state of charge is preferably a lower limit value by which discharging is determined to be possible. The third state of charge is, for example, 15%.

If determining that the state of charge has reached the third state of charge (S210: YES), the control unit 11 turns OFF the parallel-off relay 10b of the charge-discharge circuit 10, which is a relay of the charge-discharge apparatus 1, while keeping the DC relay 10a ON, thus ending minimum electric power charging (step S211). The control unit 11 transmits, to the in-vehicle charge-discharge control device 32, a message indicative of a minimum charging current value (e.g., 1A) by which charging is determined to be in progress (step S212) and then moves the process to step S220.

If determining that the state of charge has not reached the third state of charge (S210: NO), the control unit 11 moves the process to step S207 so as to continue charging (step S207), transmits a message indicative of a charging current value to the in-vehicle charge-discharge control device 32 (step S208), and then moves the process to step S220.

If it is determined that charging is not in progress (S209: NO), charging or discharging is possible with the state of charge below the first state of charge and equal to or lower than the second state of charge. In this case, the control unit 11 determines whether the standby time being measured is equal to or longer than a predetermined upper limit time (step S213). The predetermined upper limit time is, for example, 10 minutes. If determining that the standby time has not reached the predetermined upper limit time (S213: NO), the control unit 11 moves the process to step S212 so as to transmit a message to the in-vehicle charge-discharge control device 32 such that charging is determined to be in progress (S212), thus maintaining the standby state. If determining that the standby time has not reached the upper limit time at step S213 (S213: NO), the control unit 11 may transmit a message to the in-vehicle charge-discharge control device 32 such that discharging is determined to be in progress (S204), thus maintaining the standby state.

If determining that the standby time is equal to or longer than the upper limit time at step S213 (S213: YES), the control unit 11 finishes measuring the standby time (step S214) and moves the process to step S301 in which the end sequence in the flow charts of FIGS. 4 and 5 starts. Also when the control unit 11 has received an end instruction for charging or discharging control from the EMS 200 during the process of steps S201 to S220, the control unit 11 similarly finishes measuring the standby time (S214) and moves the process to step S301 in the flow charts of FIGS. 4 and 5.

In the "connection standby state", the control unit 11 determines whether a charging or discharging instruction has been received from the EMS 200 or the operation unit 14 (step S220). If determining that no charging or discharging instruction has been received (S220: NO), the control unit 11 returns the process to step S202.

If determining that the charging or discharging instruction has been received (S220: YES), the control unit 11 finishes the measurement of the standby time for the "connection standby state", which has been started (step S221). Thus, the control unit 11 keeps the DC relay 33 for the vehicle V in the ON state, ends the control for maintaining the "connection standby state", and returns the process to step S110 in the flow chart of FIG. 4.

As illustrated in the processing procedure of steps S201 to S221, the charge-discharge apparatus 1 is able to prevent the readiness state with the vehicle V from being released, while waiting for an instruction from the EMS 200 or the operation unit 14, and is able to respond the instruction as fast as possible.

In the "connection standby state", only the parallel-off relay 10b of the charge-discharge circuit 10, which is a relay for the charge-discharge apparatus 1, is turned OFF, but both of the DC relay 10a and the parallel-off relay 10b may be turned OFF. In the "connection standby state", electric power for charging or discharging may be "0" while both of the DC relay 10a and the parallel-off relay 10b of the charge-discharge circuit 10, which are relays for the charge-discharge apparatus 1, are kept ON. A state in which a charging or discharging output is "0" when an instruction for charging or discharging is provided also corresponds to the "connection standby state". In this case, the charge-discharge apparatus 1 is able to provide a faster response to an instruction from the EMS 200. Also in this case, control for transfer of electric power between the charge-discharge apparatus 1 and the electric storage device 30 of the vehicle V does not necessarily have to involve bringing electric power for charging or discharging to "0 (or zero)" but may involve continuing output of electric power of, for example, 50 to 100 W.

The process in the flow chart of FIG. 6 is illustrated by way of example. The details of control may be changed depending on the vehicle type. In the case of an FCV, for example, the electric storage device 30 will not be charged, so that in order to maintain the ON state of the DC relay 33 for the FCV, the control unit 11 transmits, to the in-vehicle charge-discharge control device 32, a message indicative of a discharging current value by which discharging is determined to be in progress. To the contrary, for the vehicle V for which settings are made such that discharging is not allowed, the control unit 11 transmits, to the in-vehicle charge-discharge control device 32, a message indicative of a charging current value by which charging is determined to be in progress. Suppose that charging is carried out through the electric power system E under charging or discharging control exercised by the EMS 200. In this case, when a charging current is close to zero, i.e., approximately 1A, which results in low efficiency, the control unit 11 may detect this state and may transmit, to the in-vehicle charge-discharge control device 32, a message indicative of a charging current value by which charging is determined to be in progress while turning OFF the parallel-off relay 10b of the charge-discharge apparatus 1, thus maintaining the "connection standby state" until electric power is provided. During this process, assuming that the chargeable electric power/dischargeable electric power for the electric storage device 30 of the vehicle V is zero, the control unit 11 preferably provides a notification of this fact to the EMS 200 and goes on standby until electric power is provided.

As described above, the charge-discharge apparatus 1 keeps providing a notification that discharging or charging is in progress with minimum electric power through communication with the in-vehicle charge-discharge control device 32, and keeps maintaining the "connection standby state" such that the DC relay 33 for the vehicle will not be turned OFF under control of the in-vehicle charge-discharge control device 32 of the vehicle V. This makes it possible to exercise control at a required response speed without performing a connection sequence with the vehicle V each time charging and discharging switching is performed as illustrated in FIG. 3 or a voltage or frequency adjustment is made. Electric power consumed by the vehicle V in the "connection standby state" is higher than that in a state where the DC relay 33 is OFF. Accordingly, in order to reduce electric power consumption in the standby state where no charging or discharging is performed, the charge-discharge apparatus 1 may combine control that involves turning OFF the DC relay 33 for the vehicle while maintaining the state where the communication connection with the vehicle is kept established, thus making it possible to exercise control with minimized electric power consumption and with high responsivity.

Embodiment 1 has been described based on the example where the vehicle V is not scheduled to be used for the time being, and where the charging or discharging control is exercised while vehicle V remains connected to the charge-discharge apparatus 1. When a communication connection is established at all times between the charge-discharge apparatus 1 and the EMS 200 and charging and discharging are repeated in accordance with an instruction from the EMS 200, the locking of the connector 35 for the vehicle V and the connector 15 for the charge-discharge apparatus 1 is kept ON. While higher priority is given to an instruction from the EMS 200, however, the user may encounter an unfavorable situation in which although the vehicle V is to be used by the user, the locking of the connectors 15 and 35 will not be turned OFF, making the vehicle V unusable. Accordingly, when the operation unit 14 has received a STOP operation, the charge-discharge apparatus 1 first assumes that the user wishes to disconnect the connector 15. Based on this assumption, the charge-discharge apparatus 1 thereafter does not receive an instruction including a start-up instruction from the EMS 200, and exercises control such that the locking of the connectors 15 and 35 is turned OFF. This enables the user to connect and disconnect the connector(s). Secondly, upon lapse of a certain period of time after the operation unit 14 has received the STOP operation, the control unit 11 then makes a transition to a state where the control unit 11 receives an instruction including a start-up instruction from the EMS 200, with the locking of the connectors 15 and 35 kept OFF. In this case, the control unit 11 turns ON the locking of the connectors 15 and 35 upon receiving, from the EMS 200, an instruction for checking the connection with the vehicle V. In this case, if the user still wishes to disconnect the connectors 15 and 35, the STOP operation is carried out again, and the control unit 11 thus makes a transition to a first state for the case where the STOP operation has been received.

### Variations

In Embodiment 1 illustrated above, the process for maintaining the connection standby state in which the relay for the vehicle is kept ON has been described. In one variation, the charge-discharge apparatus 1 and the vehicle V are able to go on standby also in a "disconnection standby state" different from the "connection standby state". The "disconnection standby state" is a state in which the communication connection with the in-vehicle charge-discharge control device 32 is disconnected, and start of charging or discharging requires performing the predetermined connection sequence again. The "disconnection standby state" is a state in which the ON state of the locking of the connector 35 for the vehicle V and the connector 15 for the charge-discharge apparatus 1 has already been checked, and the locking is kept ON. The "disconnection standby state" and "stopped state" merely differ in whether the locking of the connectors are ON or OFF. In terms of the state of control for the charge-discharge apparatus 1 and the vehicle V, the disconnection standby state is equivalent to the stopped state.

In the processing procedure illustrated in the flow charts of FIGS. 4 to 6, charging or discharging is started(S111) when a charging or discharging instruction has been received (S220: YES) under the "connection standby state", and a sequence (S301 to S305) to make a transition to the stopped state is performed when the standby time has exceeded the upper limit time. In one variation, the charge-discharge apparatus 1 is controlled such that a transition is made from the "connection standby state" not only to the stopped state but also to the "disconnection standby state" except when charging or discharging is to be carried out.

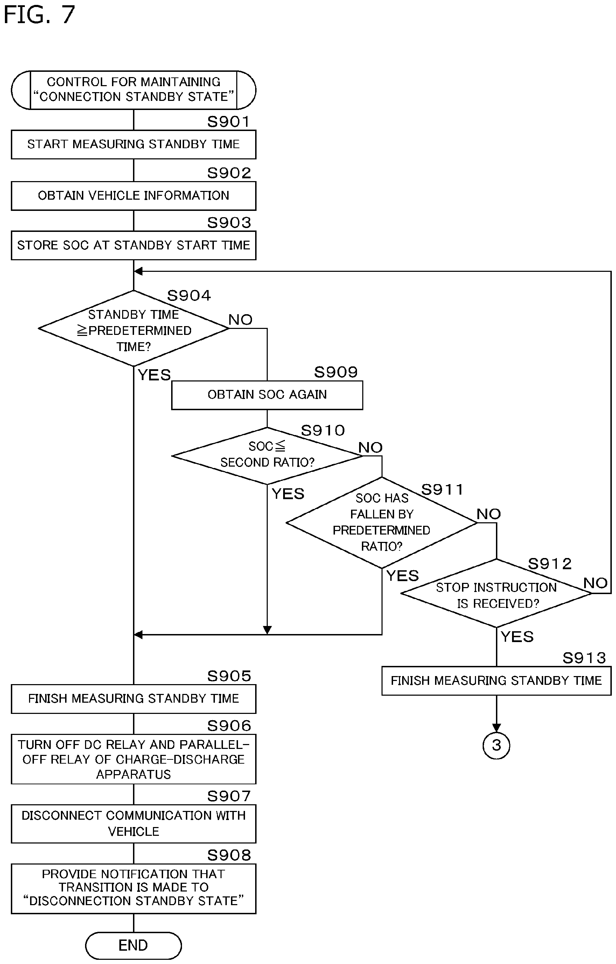

FIG. 7 is a flow chart illustrating an exemplary control procedure for making a state transition between the "connection standby state" and the "disconnection standby state". The following description is based on the assumption that the processing procedure illustrated in the flow chart of FIG. 7 is an alternative to the procedure illustrated in the flow chart of FIG. 6, but the processing procedure illustrated in the flow chart of FIG. 7 may be carried out in combination with the procedure illustrated in the flow chart of FIG. 6.

The control unit 11 starts measuring the standby time for the "connection standby state" (step S901).

The control unit 11 obtains, from the in-vehicle charge-discharge control device 32, vehicle information including the state of charge of the electric storage device 30 (step S902) and stores the state of charge (step S903). The control unit 11 stores the said state of charge as a state of charge at a standby start time.

The control unit 11 determines whether the standby time is equal to or longer than a predetermined time, e.g., 10 minutes (step S904). If determining that the standby time is equal to or longer than the predetermined time (step S904: YES), the control unit 11 finishes measuring the standby time (step S905). The control unit 11 turns OFF the DC relay 10a and the parallel-off relay 10b of the charge-discharge circuit 10, which are relays for the charge-discharge apparatus 1 (step S906), and disconnects the communication with the vehicle V (step S907). The control unit 11 provides a notification that a transition is made to the "disconnection standby state" from the vehicle communication unit 12a to the in-vehicle charge-discharge control device 32 (step S908). In this case, the control unit 11 ends the process for maintaining the "connection standby state" and makes a transition to the "disconnection standby state" through steps S905 to S908 instead of returning the process to the flow charts of FIGS. 4 and 5.

If determining that the standby time is not equal to or longer than the predetermined time at step S904 (step S904: NO), the control unit 11 obtains the state of charge of the electric storage device 30 from the in-vehicle charge-discharge control device 32 (step S909). The control unit 11 determines whether the state of charge obtained is equal to or lower than the second state of charge, which is set for determining that the vehicle V does not allow discharging and for turning OFF the DC relay 33 (step S910).

If determining that the state of charge is equal to or lower than the second state of charge (S910: YES), the control unit 11 moves the process to step S905. In this case, the charge-discharge apparatus 1 makes a transition to the "disconnection standby state".

If determining that the state of charge is not equal to or lower than the second state of charge (S910: NO), the control unit 11 determines whether the state of charge obtained in step S909 has fallen by a predetermined ratio with respect to the state of charge at the standby start time (step S911).

If determining that the state of charge has not fallen by the predetermined ratio at step S911 (step S911: NO), the control unit 11 moves the process to step S912.

If determining that the state of charge has fallen by the predetermined ratio (S911: YES), the control unit 11 moves the process to step S905. Also in this case, the charge-discharge apparatus 1 makes a transition to the "disconnection standby state".

The control unit 11 determines whether a stop instruction has been received from the EMS 200 or the operation unit 14 in the "connection standby state" (step S912). Upon determining that the stop instruction has been received (S912: YES), the control unit 11 finishes the measurement of the standby time for the "connection standby state", which has been started (step S913), and moves the process to step S301 in which the end sequence in the flow charts of FIGS. 4 and 5 starts. In addition, if an irregular stop is detected, the control unit 11 performs an irregular stop process so as to make a transition from the "connection standby state" to a different state, i.e., an irregular stop state.

If determining that no stop instruction has been received at step S912 (S912: NO), the control unit 11 returns the process to step S904 so as to maintain the connection standby state.

The control unit 11 may receive, in addition to conditions illustrated in the flow chart of FIG. 7, not only the "stop instruction" but also an instruction for making a transition to the "disconnection standby state" from the EMS 200. Also in this case, a transition may be made to the "disconnection standby state".

Thus, when the control unit 11 has detected by analogy that the situation does not require maintaining the connection standby state (i.e., the state in which charging or discharging responsivity is high), the control unit 11 preferably makes a transition to the state in which the communication connection is disconnected.

The charge-discharge apparatus 1 may make a return from the disconnection standby state to the connection standby state. The control unit 11 of the charge-discharge apparatus 1 that has made a transition to the "disconnection standby state" be able to communicate with the EMS 200 through the EMS communication unit 12b. Thus, the control unit 11 performs the connection sequence so as to temporarily make a transition to the connection standby state and then start charging or discharging upon receiving a charging or discharging instruction from the EMS 200. Upon receiving an instruction for making a transition to the "connection standby state" (i.e., a state in which charging or discharging is immediately enabled) from the EMS 200, the control unit 11 in the disconnection standby state preferably performs the connection sequence so as to make a transition to the "connection standby state".

With regard to disconnection of a communication connections, the control unit 11 should avoid keeping a communication connection established for a long time (e.g., for a period of time longer than 24 hours) even if the charge-discharge apparatus 1 is not in the "connection standby state". Accordingly, if it is detected that a communication connection that has been established for a period of time equal to or longer than a time defined as a long time, the control unit 11 desirably disconnects the communication connection.

### Embodiment 2

Embodiment 2 further involves exercising control for protecting the charge-discharge circuit in consideration of combining the vehicles V (which are various electric vehicles manufactured by different manufacturers) with a variety of the EMSs 200. While mediating between control exercised by the EMS 200 and control exercised by the vehicle V, the charge-discharge apparatus 1 makes a transition to a protection state in which no response is made to an instruction from the EMS 200 when a situation where the DC relays 33 and 10a and the parallel-off relay 10b are turned ON and OFF repeatedly is likely to occur.

The hardware configurations of the charge-discharge apparatus 1 and the EMS 200 according to Embodiment 2 are similar to those in Embodiment 1. Thus, components similar to those in Embodiment 1 will be identified with the same reference signs and will not be described in detail. The following description discusses control exercised by the charge-discharge apparatus 1 so as to prevent repeated ON and OFF switching of the DC relays 33 and 10a and the parallel-off relay 10b according to Embodiment 2.

The following description is based on by way of example on the case where the EMS 200 exercises a control to carry out, for example, charging until the state of charge (SOC) of the electric storage device 30 in the vehicle V connecting to the EMS 200 through the charge-discharge apparatus 1, reaches a state of charge which is determined to be fully charged. In the charge-discharge apparatus 1 that has received a charging instruction from the EMS 200, the control unit 11 performs the predetermined connection sequence through a communication connection with the in-vehicle charge-discharge control device 32 via the communication line CL and an output adjustment via the power line VPL. Charging starts upon completion of preparation for an output necessary for charging or discharging between the charge-discharge apparatus 1 and the electric storage device 30 as a result of the connection sequence.

Depending on conditions, such as temperature, the in-vehicle charge-discharge control device 32 may determine that the electric storage device 30 will be degraded if the electric storage device 30 is further charged and may thus stop charging before the state of charge (SOC) of the electric storage device 30 reaches a predetermined first ratio by which the electric storage device 30 is determined to be fully charged. In this case, the DC relay 33 of the vehicle V is turned OFF by the in-vehicle charge-discharge control device 32, so that charging is stopped.

Even though the in-vehicle charge-discharge control device 32 stops charging, the EMS 200 may output a charging instruction until the state of charge of the electric storage device 30 obtained through the charge-discharge apparatus 1 reaches a fully charged capacity or the first ratio.

When the EMS 200 outputs a charging instruction, a conventional charge-discharge apparatus would make an attempt to start charging again even if charging is stopped by the in-vehicle charge-discharge control device 32 and the DC relay 33 of the vehicle V is cut off. To start charging, the predetermined connection sequence including a procedure for turning ON the DC relay 33 is performed; however, because the electric storage device 30 is determined as being unable to be further charged, the in-vehicle charge-discharge control device 32 exercises charging stop control again so as to turn OFF the DC relay 33 and thus stop charging. Because the state of charge of the electric storage device 30 does not reach the fully charged capacity or the first ratio, the EMS 200 will output a charging instruction again.

When the EMS 200 transmits a charging instruction although the in-vehicle charge-discharge control device 32 determines that charging is impossible as described above, turning OFF of the DC relay 33 performed by the vehicle V and turning ON of the DC relay 33 performed by following a charging start procedure based on the charging instruction will be repeated. Repeatedly turning ON and OFF the DC relay 33 promotes degradation of the DC relay 33.

Accordingly, when the charge-discharge apparatus 1 according to Embodiment 2 encounters a situation in which the DC relay 33 is turned ON and OFF repeatedly in accordance with control exercised by the in-vehicle charge-discharge control device 32 and an instruction from the EMS 200, the charge-discharge apparatus 1 ignores the instruction from the EMS 200 and makes a transition to the protection state in which no response is made to the instruction, i.e., the protection state in which at least turning ON and OFF of the DC relay 33 will not be performed.

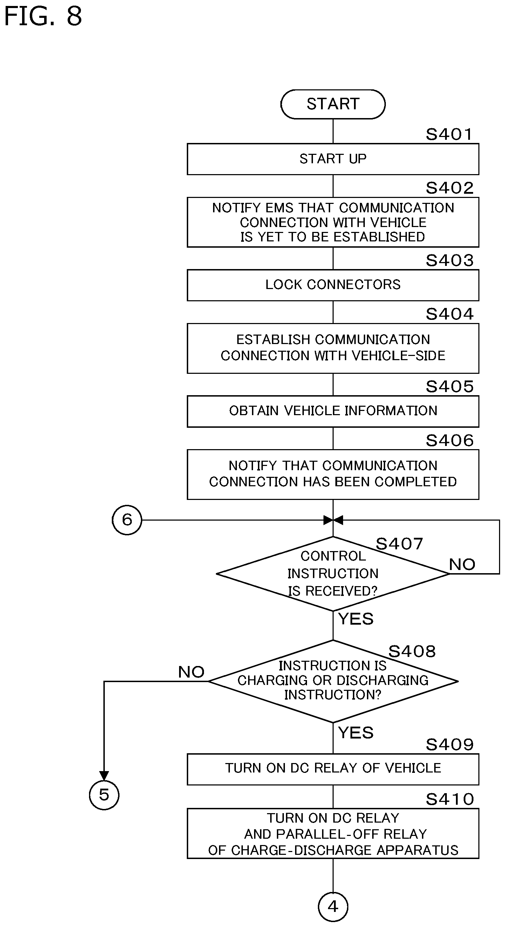

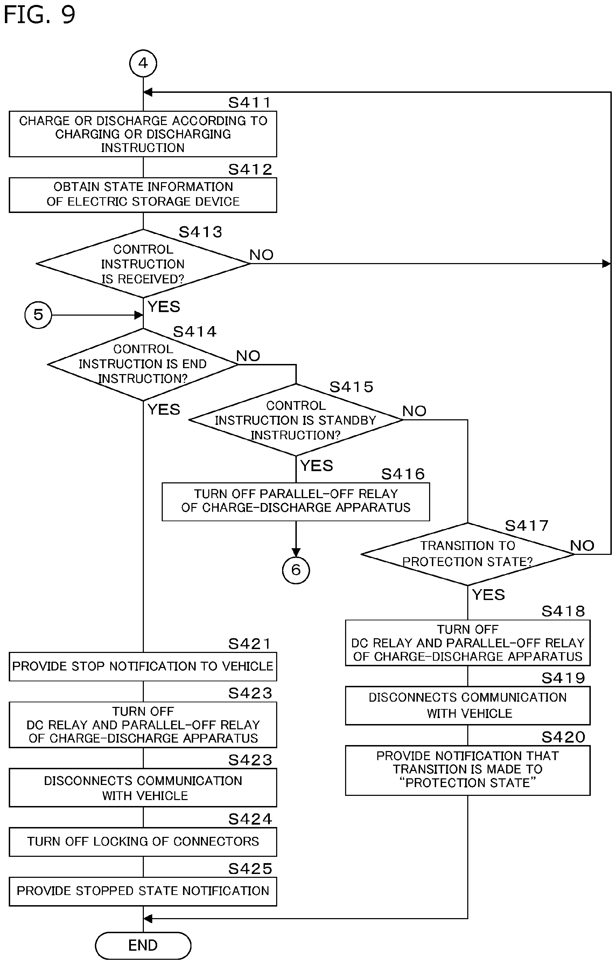

FIGS. 8 and 9 are flow charts illustrating an exemplary procedure to be performed by the charge-discharge apparatus 1 in making a transition to the protection state. With the EMS communication unit 12b establishing a communication connection with the EMS 200, the control unit 11 of the charge-discharge apparatus 1 performs the process described below.

The control unit 11 starts up the charge-discharge apparatus 1 upon receiving a start-up instruction from the EMS 200, an instruction from the operation unit 14, or scheduled start of electric power supply from the power supply unit 13 (step S401), and then notifies the EMS 200 that a communication connection with the vehicle V is yet to be established (step S402).

The control unit 11 performs a predetermined connection sequence so as to turn ON the locking of the connector 15 and the connector 35 (step S403) and establishes a communication connection with the in-vehicle charge-discharge control device 32 through the vehicle communication unit 12a (step S404). Upon establishing the communication connection, the control unit 11 obtains vehicle information on the vehicle V from the in-vehicle charge-discharge control device 32 (step S405). The vehicle information obtained in step S405 includes at least a charging capacity and a state of charge (SOC). The vehicle information may include identification data or vehicle type of the vehicle V. Examples of the vehicle type include an EV, an HEV, a PHEV, and an FCV. When the vehicle type is an FCV, the vehicle V is a vehicle dedicated to discharging. If the vehicle type is an EV, an HEV, or a PHEV, the vehicle V may be chargeable only.

The control unit 11 provides, to the EMS 200, a notification that the communication connection with the vehicle V has been completed (step S406). The connection completion notification includes chargeable or dischargeable electric power determined in accordance with the charging capacity and the state of charge.

The control unit 11 determines whether a control instruction has been received from the EMS 200 (step S407). If determining that control instruction has not been received from the EMS 200 through the EMS communication unit 12b (S407: NO), the control unit 11 returns the process to step S407 after a lapse of a predetermined standby time. Until receiving the control instruction, the control unit 11 is put on standby.

If determining that the control instruction has been received at step S407 (S407: YES), the control unit 11 determines whether the control instruction is a charging instruction or a discharging instruction (step S408).

If determining that the control instruction is a charging instruction or a discharging instruction at step S408 (S408: YES), the control unit 11 performs the rest of the connection sequence with the in-vehicle charge-discharge control device 32 and the electric storage device 30 so as to turn ON the DC relay 33 of the vehicle V (step S409). The control unit 11 turns ON the DC relay 10a and the parallel-off relay 10b of the charge-discharge circuit 10 (step S410) and then starts or continues charging or discharging (step S411).

The control unit 11 obtains state information including a state of charge for the electric storage device 30 from the in-vehicle charge-discharge control device 32 through the vehicle communication unit 12a (step S412). In step S412, when charging is being stopped under control exercised by the in-vehicle charge-discharge control device 32, the control unit 11 receives an end notification from the in-vehicle charge-discharge control device 32 and is thus able to obtain state information indicating that charging is being stopped.

The control unit 11 determines whether the control instruction has been received from the EMS 200 or the operation unit 14 (step S413). When charging is being stopped under control exercised by the in-vehicle charge-discharge control device 32, the DC relay 33 for the vehicle V is OFF. The charge-discharge apparatus 1 requests the predetermined connection sequence to the in-vehicle charge-discharge control device 32 in order to turn ON the DC relay 33 again. If determining that control instruction has not been received at step S413 (S413: NO), the control unit 11 returns the process to step S411.

If determining that the control instruction has been received at step S413 (S413: YES), the control unit 11 determines whether the control instruction is an instruction which indicates the end of charging or discharging control (the instruction is provided from the EMS 200, or a STOP button operation performed through the operation unit 14) (step S414).

If determining that the control instruction does not indicate the end of charging or discharging control (S414: NO), the control unit 11 determines whether the control instruction is a standby instruction provided from the EMS 200 (step S415). If determining that the control instruction is a standby instruction (S415: YES), the control unit 11 turns OFF the parallel-off relay 10b of the charge-discharge circuit 10 while keeping the DC relay 10a ON (step S416) and returns the process to step S407, so that a return is made to the standby state.

If it is determined that the control instruction is not a standby instruction (S415: NO), the control instruction is an instruction for switching between charging and discharging. The control unit 11 determines whether a transition is to be made to a protection state in which the relays are protected (step S417). The determination of whether a transition is to be made to the protection state in step S417 will be described in detail below.

If determining in step S417 that a transition is to be made to the protection state (S417: YES), the control unit 11 turns OFF the DC relay 10a and the parallel-off relay 10b of the charge-discharge circuit 10 (step S418). The control unit 11 disconnects the connection with the vehicle V (step S419) and provides a notification of the transition to the protection state from the EMS communication unit 12b to the EMS 200 (step S420). The control unit 11 then ends the process, with the connector locking kept ON. The control unit 11 may skip providing the notification in step S420.

In this case, the control unit 11 makes a transition to the protection state. In the protection state, the control unit 11 receives an instruction from the EMS 200 through the EMS communication unit 12b but ignores the instruction and makes no response to the instruction. In the protection state, the control unit 11 prevents at least the DC relay 33 of the vehicle V from being turned ON and OFF. In the protection state, the control unit 11 may shut down the apparatus forcedly. When the control unit 11 shuts down the apparatus, the control unit 11 turns OFF the connector locking, and disconnects the communication connection with the EMS 200.

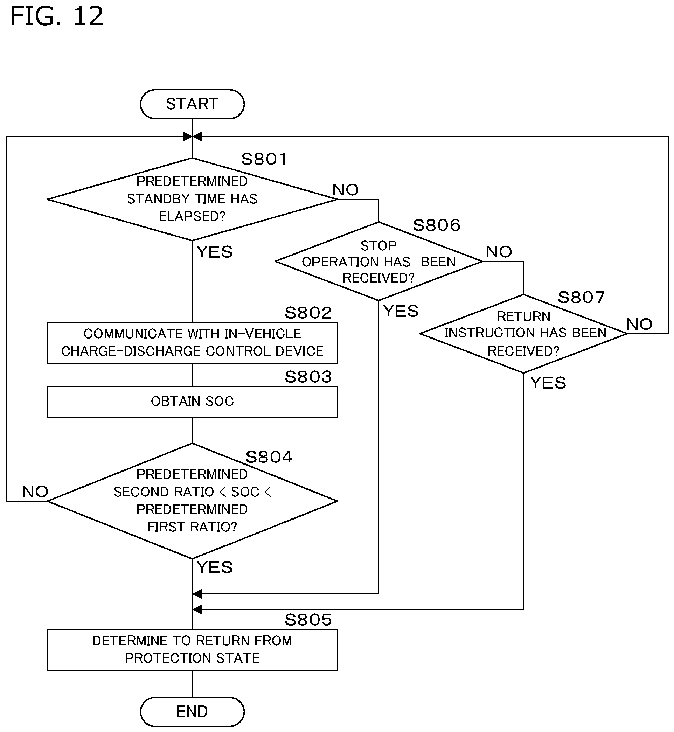

The control unit 11 makes a return from the protection state when the control unit 11 has shut down the charge-discharge apparatus 1 temporarily and has then started up the charge-discharge apparatus 1 again, or autonomously makes a return from the protection state in accordance with the flow chart of FIG. 12 (which will be described below). When the control unit 11 has shut down the charge-discharge apparatus 1, the control unit 11 starts up the EMS communication unit 12b in an intermittent manner and starts up the charge-discharge apparatus 1 again upon checking that a start-up instruction has been received from the EMS 200.

If determining that no transition is to be made at step S417 (S413: NO), the control unit 11 returns the process to step S411 so as to continue charging or discharging responsive to the control instruction.

If determining that the control instruction indicates the end of charging or discharging control at step S414 (S414: YES), the control unit 11 starts an end sequence so as to provide a stop notification from the vehicle communication unit 12a to the in-vehicle charge-discharge control device 32 (step S421). The control unit 11 turns OFF the DC relay 10a and the parallel-off relay 10b of the charge-discharge circuit 10 (step S422) and disconnects the communication with the vehicle V (step S423). The control unit 11 turns OFF the locking of the connector 15 and the connector 35 (step S424) and provides a stopped state notification to the EMS 200 (step S305) so as to end the process. The control unit 11 may make a transition to a shutdown or a sleep state.

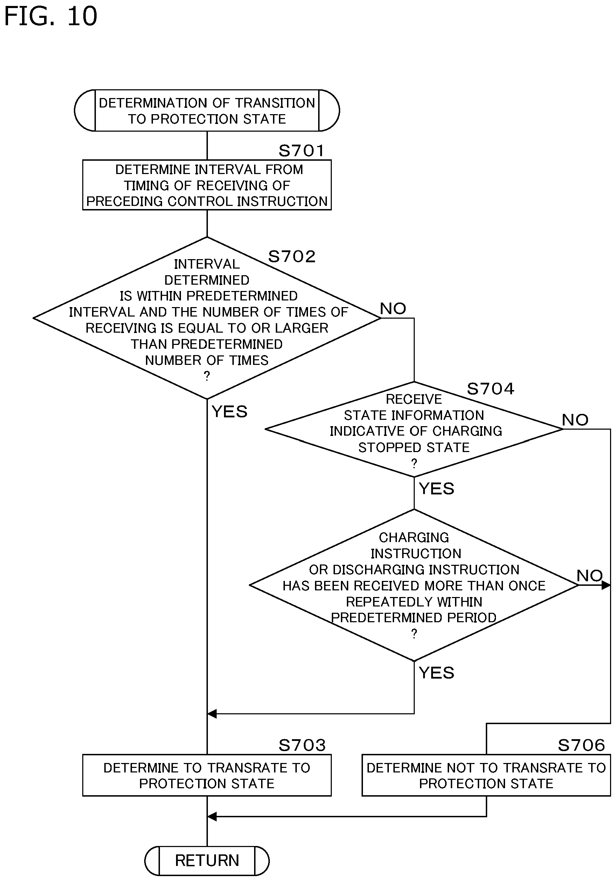

FIG. 10 is a flow chart illustrating an exemplary processing procedure for determining whether a transition is to be made to the protection state. The flow chart of FIG. 10 corresponds to the details of step S417 included in the processing procedure illustrated in the flow charts of FIGS. 8 and 9.

The control unit 11 determines an interval from the timing of receiving of a preceding charging instruction or discharging instruction until the charging instruction or discharging instruction is received at step S408 (step S701). The control unit 11 determines whether the interval determined is within a predetermined interval and whether the number of times the instruction has been received is equal to or larger than a predetermined number of times (step S702).

In steps S701 and S702, the control unit 11 makes a count each time a charging instruction or discharging instruction is received, and resets the count to zero when a period of time corresponding to the predetermined interval has elapsed between reception of an immediately preceding charging instruction or discharging instruction and reception of a next charging instruction or discharging instruction.

If determining that the interval determined is within the predetermined interval and the number of times the instruction has been received is equal to or larger than the predetermined number of times (S702: YES), the control unit 11 determines that a transition is to be made to the protection state (step S703) and moves the process to step S418 in the flow chart of FIG. 9.

In step S702, the control unit 11 may determine whether the same instruction, i.e., either one of a charging instruction and a discharging instruction, is received repeatedly within a predetermined period corresponding to the product of the predetermined interval and the predetermined number of times. If determining the same instruction is received repeatedly within the predetermined period, the control unit 11 may determine that a transition is to be made to the protection state.

In step S702, the control unit 11 may determine whether a charging instruction and a discharging instruction are received substantially alternately within a predetermined period corresponding to the product of the predetermined interval and the predetermined number of times. If determining the charging instruction and discharging instruction are received alternately within the predetermined period, the control unit 11 may determine that a transition is to be made to the protection state.

If determining that the interval determined in step S701 is not within the predetermined interval or the number of times the instruction has been received is below the predetermined number of times at step S702 (S702: NO), the control unit 11 determines whether state information indicative of a charging stopped state has been obtained from the in-vehicle charge-discharge control device 32 (step S704).

Upon determining that the state of charge of the electric storage device 30 has reached the first ratio or a higher ratio indicative of the fully charged capacity and the DC relay 33 is to be switched OFF autonomously, the in-vehicle charge-discharge control device 32 of the vehicle V may provide a charging stop notification to the charge-discharge apparatus 1. In this case, the control unit 11 is able to grasp, in step S412 illustrated in the flow chart of FIG. 9, a state in which charging is stopped under control exercised by the vehicle V.

If determining that the state indicative of charging stop has been obtained at step S704 (S704: YES), the control unit 11 determines whether the charging instruction or discharging instruction has been received more than once repeatedly within the predetermined period in step S408 (step S705).

If determining that switching has been made to the charging stopped state by the in-vehicle charge-discharge control device 32 and the same instruction, which is either the charging instruction or discharging instruction, has been received more than once repeatedly within the predetermined period at step S705 (S705: YES), the control unit 11 determines that a transition is to be made to the protection state (S703). After having made the determination, the control unit 11 moves the process to step S418 in the flow chart of FIG. 9.

When the determination is NO in either step S704 or step S705 (S704: NO, or S705: NO), the control unit 11 determines that no transition is to be made to the protection state (step S706) and returns the process to step S411 in the flow chart of FIG. 9.

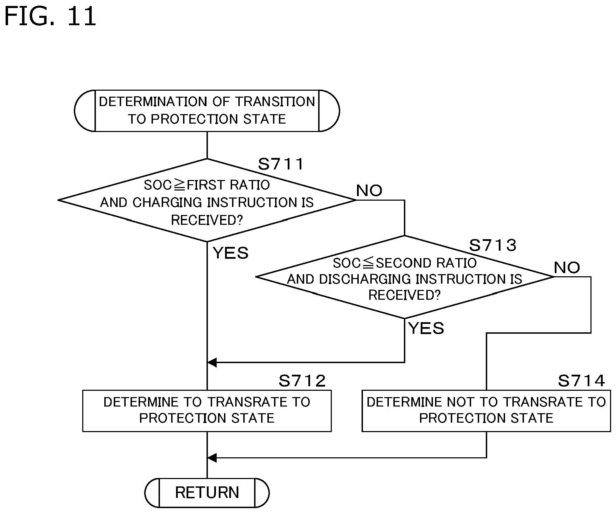

FIG. 11 is a flow chart illustrating another exemplary processing procedure for determining whether a transition is to be made to the protection state. The flow chart of FIG. 11 corresponds to the details of step S417 included in the processing procedure illustrated in the flow charts of FIGS. 8 and 9.

With the state of charge (which is included in the state information on the electric storage device 30 obtained in step S412) being equal to or higher than the predetermined first ratio indicative of the fully charged capacity by which the electric storage device 30 is determined to be fully charged, the control unit 11 determines whether the charging instruction has been received from the EMS 200 in step S413 (step S711).

If determining that the charging instruction has been received although the state of charge is equal to or higher than the predetermined first ratio at step S711 (S711: YES), the control unit 11 determines that a transition is to be made to the protection state (step S712) and moves the process to step S418 in the flow chart of FIG. 9.

When the control unit 11 has determined in step S711 that the charging instruction has been received again although the state of charge is equal to or higher than the predetermined first ratio, it is assumed that because the state of charge has reached a level by which the vehicle V determines the electric storage device 30 to be fully charged, the in-vehicle charge-discharge control device 32 subsequently exercises control so as to stop charging. If the charging instruction is transmitted again from the EMS 200 in spite of such control, a charging stop process to be performed by the in-vehicle charge-discharge control device 32 and transmission of the charging instruction from the EMS 200 are expected to be repeated thereafter. As a result, the DC relay 33 of the vehicle V and the DC relay 10a and the parallel-off relay 10b of the charge-discharge apparatus 1 are expected to be turned ON and OFF repeatedly. Accordingly, the control unit 11 of the charge-discharge apparatus 1 according to Embodiment 2 makes a transition to the protection state so as to prevent the charging instruction from being transmitted repeatedly from the EMS 200 in such a case.

If determining that the state of charge is not equal to or higher than the predetermined first ratio or no charging instruction has been received at step S711 (S711: NO), the control unit 11 determines whether the discharging instruction has been received from the EMS 200 in step S413, with the state of charge (which has been obtained in step S412) being equal to or lower than a predetermined second ratio indicative of a fully charged capacity by which the state of charge is determined to be empty or at its lower limit (step S713).

If determining that the discharging instruction has been received although the state of charge is equal to or lower than the predetermined second ratio at step S713 (S713: YES), the control unit 11 determines that a transition is to be made to the protection state (S712) and moves the process to step S418 in the flow chart of FIG. 9.

When the control unit 11 has determined in step S713 that the discharging instruction has been received again although the state of charge is equal to or lower than the predetermined second ratio, it is assumed that because the state of charge has reached a level by which the vehicle V determines the charging capacity to be close to the lower limit, the in-vehicle charge-discharge control device 32 subsequently exercises control so as to stop discharging. If the discharging instruction is transmitted again from the EMS 200 in spite of such control, a discharging stop process to be performed by the in-vehicle charge-discharge control device 32 and transmission of the discharging instruction from the EMS 200 are expected to be repeated thereafter. As a result, the DC relay 33 of the vehicle V and the DC relay 10a and the parallel-off relay 10b of the charge-discharge apparatus 1 are expected to be turned ON and OFF repeatedly. Accordingly, the control unit 11 of the charge-discharge apparatus 1 according to Embodiment 2 makes a transition to the protection state so as to prevent the discharging instruction from being transmitted repeatedly from the EMS 200 in such a case.

If determining that the state of charge is not equal to or lower than the predetermined second ratio or no discharging instruction has been received at step S713 (S713: NO), the control unit 11 determines that no transition is to be made to the protection state (step S714) and returns the process to step S411 in the flow chart of FIG. 9.

In determining whether a transition is to be made to the protection state in step S117, the control unit 11 performs both or either one of the processing procedure illustrated in the flow chart of FIG. 10 and the processing procedure illustrated in FIG. 11.

FIG. 12 is a flow chart illustrating an exemplary processing procedure for making a return from the protection state. In the protection state where an instruction from the EMS 200 is to be ignored, with the EMS communication unit 12b maintaining the communication connection with the EMS 200 and the connector locking kept ON, the control unit 11 continuously performs the process described below.

The control unit 11 determines whether a predetermined standby time has elapsed after the transition to the protection state (step S801).

The control unit 11 communicates with the in-vehicle charge-discharge control device 32 of the vehicle V through the vehicle communication unit 12a in an intermittent manner (step S802) and obtains the state of charge of the electric storage device 30 (step S803).

The control unit 11 determines whether the state of charge obtained is higher than the predetermined second ratio and is lower than the predetermined first ratio (step S804). If determining that the state of charge obtained is equal to or higher than the predetermined first ratio or the state of charge obtained is equal to or lower than the predetermined second ratio (S804: NO), the control unit 11 returns the process to step S801.

If determining that the state of charge obtained is higher than the predetermined second ratio and is lower than the predetermined first ratio (S804: YES), the control unit 11 determines that a return is to be made from the protection state (step S805) and thus ends the process. The control unit 11 then exercises control responsive to an instruction from the EMS 200.

If determining that the predetermined standby time has not elapsed at step S801 (S801: NO), the control unit 11 determines whether a STOP operation has been received through the operation unit 14 (step S806). If determining that the STOP operation has been received (S806: YES), the control unit 11 moves the process to step S805 so as to make a return from the protection state and perform a process responsive to the operation.

If determining that no STOP operation has been received at step S806 (S806: NO), the control unit 11 determines whether a return instruction (which may be a resetting instruction) from the EMS 200 has been received through the EMS communication unit 12b (step S807).

If determining that the return instruction has been received from the EMS 200 at step S807 (S807: YES), the control unit 11 moves the process to step S805 so as to make a return from the protection state and perform a process (e.g., a connection sequence or an end sequence) responsive to the instruction.

If determining in step S807 that no return instruction has been received (S807: NO), the control unit 11 returns the process to step S801.

The determination procedure illustrated in the flow chart of FIG. 10 or FIG. 11 involves determining that a transition is to be made to the protection state in a situation where the DC relay 33 of the vehicle V and the DC relay 10a and the parallel-off relay 10b of the charge-discharge apparatus 1 are actually repeatedly turned ON and OFF or in a situation where the relays are expected to be repeatedly turned ON and OFF with high probability. In other words, when a control instruction from the EMS 200 is not suitable for control exercised by the in-vehicle charge-discharge control device 32, a transition is made to the protection state in which no response is made to an instruction from the EMS 200 at least for a certain period of time, thus making it possible to protect the charge-discharge circuit.

In addition, the control unit 11 may exercise control so as to make a transition to the protection state when the vehicle communication unit 12a has received a notification of an irregular stop while the control unit 11 performs a predetermined connection sequence with the in-vehicle charge-discharge control device 32 in accordance with a control instruction from the EMS 200.

After having checked that the state of charge of the electric storage device 30 in the vehicle V has returned to a level at which charging is possible or discharging is possible, the control unit 11 of the charge-discharge apparatus 1 makes a return from the protection state. This makes it possible to prevent the DC relays 33 and 10a and the parallel-off relay 10b from being switched ON and OFF repeatedly again.

### Third Embodiment

In Embodiment 3, a transition is made to the protection state based on a transition condition set in accordance with the vehicle type of the vehicle V that is connected through the connectors 15 and 35 to the charge-discharge apparatus 1 via the vehicle communication unit 12a.

The hardware configuration of the charge-discharge apparatus 1 according to Embodiment 3 and the connection configuration of the charge-discharge apparatus with the EMS 200 and the in-vehicle charge-discharge control device 32 are similar to those in Embodiment 1. Components of the charge-discharge apparatus 1 according to Embodiment 3 similar to those of the charge-discharge apparatus 1 according to Embodiment 1 will be identified with the same reference signs and will not be described in detail.

In Embodiment 3, the charge-discharge apparatus 1 preliminarily stores, in a memory incorporated into the control unit 11, the transition condition for each of the vehicle types of the vehicles V intended for charging and discharging. In one example, the transition conditions are stored such that the determination process illustrated in the flow chart of FIG. 10 is to be performed for the vehicle V of a first vehicle type and the determination process illustrated in the flow chart of FIG. 11 is to be performed for the vehicle V of a second vehicle type. The transition conditions may be stored such that the first ratio for the fully charged capacity in the flow chart of FIG. 11 is 85% for the vehicle V of a third vehicle type and is 90% for the vehicle V of a fourth vehicle type. The transition conditions may be stored based on criteria which are provided from manufacturers of the vehicles V and by which the electric storage device 30 is determined to be fully charged or empty (or at a lower limit), or may be created by the charge-discharge apparatus 1 on the basis of tests carried out with the vehicles V.

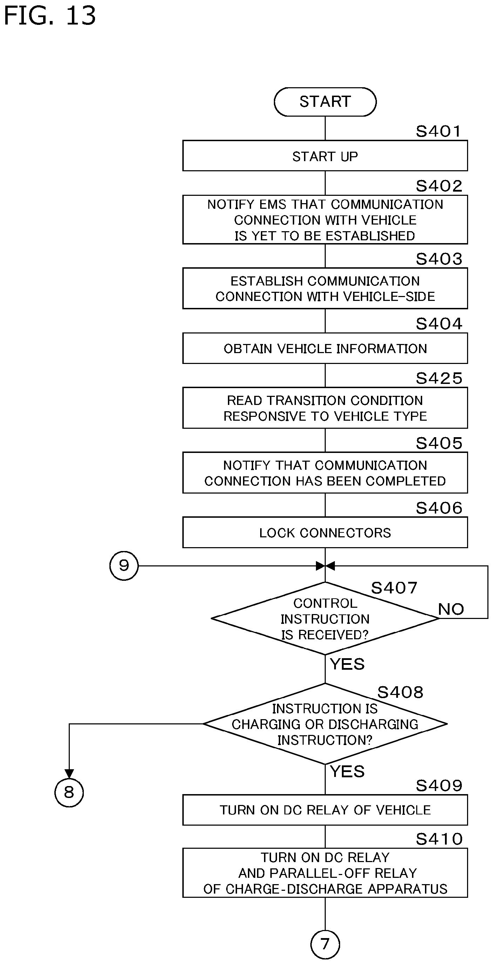

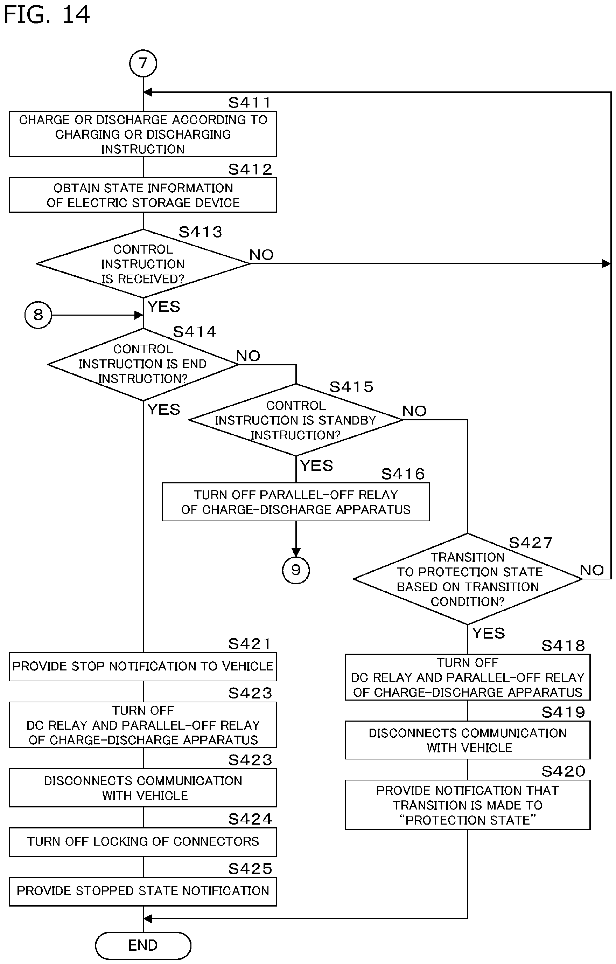

FIGS. 13 and 14 are flow charts illustrating an exemplary procedure to be performed by the charge-discharge apparatus 1 according to Embodiment 3 in making a transition to the protection state. Steps in the processing procedure of the flow charts of FIGS. 13 and 14 similar to those in the processing procedure illustrated in the flow charts of FIGS. 8 and 9 according to Embodiment 2 will be identified with the same step numbers and will not be described in detail.

In Embodiment 3, the control unit 11 obtains vehicle information in step S404 (S404) and reads, from the memory, the transition condition responsive to the vehicle type in accordance with vehicle type identification information included in the vehicle information (step S425).

If determining that a control instruction is not a standby instruction at step S415 (S415: NO), the control unit 11 determines whether a transition is to be made to the protection state based on the transition condition responsive to the vehicle type and read in step S425 (step S427). The details of the determination in step S427 may correspond to both or either one of the processing procedure illustrated in the flow chart of FIG. 10 and the processing procedure illustrated in the flow chart of FIG. 11 depending on the transition condition.

Obtaining information to identify a vehicle type and making a determination based on a transition condition responsive to the vehicle type makes it possible to protect not only the vehicle V but also the charge-discharge circuit 10 of the apparatus while suitably mediating between the details of charging or discharging control for the vehicle V different for each vehicle type and instructions from a variety of the EMSs 200.

The embodiments disclosed above are not limitative but illustrative in all respects. The scope of the present invention is defined by the claims and includes all changes falling within the meaning and range equivalent to the claims.

### [Description of Reference Numerals]

- 1: charge-discharge apparatus
- 10: charge-discharge circuit
- 10a: DC relay
- 10b: parallel-off relay
- 11: control unit
- 12: communication unit
- 12a: vehicle communication unit
- 12b: EMS communication unit
- 15: connector
- 1P: computer program
- 200: EMS
- 21: load
- 30: electric storage device
- 32: in-vehicle charge-discharge control device
- 33: DC relay
- 35: connector
- PL: power line
- V: vehicle
- VPL: power line

## Claims

1. A charge-discharge apparatus including a connector with an in-vehicle power line for connection with a storage battery provided in a vehicle, the charge-discharge apparatus controlling charging and discharging of the storage battery, the charge-discharge apparatus comprising:
a communication unit to establish a communication connection with an in-vehicle control device that switches ON and OFF a vehicle-side relay disposed on the in-vehicle power line;
a communication control unit to transmit and receive messages to and from the in-vehicle control device through the communication unit in accordance with a predetermined sequence; and
a connection standby state maintaining unit to maintain a connection standby state in which the vehicle-side relay remains ON even while neither charging nor discharging of the storage battery is carried out after the vehicle-side relay is switched ON in accordance with the predetermined sequence.

2. The charge-discharge apparatus according to claim 1, further comprising a charge-discharge circuit including an apparatus-side relay to switch ON and OFF transfer of electric power between the storage battery and a commercial power supply or a load, wherein
the vehicle-side relay is ON and the relay of the charge-discharge circuit is OFF in the connection standby state.

3. The charge-discharge apparatus according to claim 2, wherein
the relay of the charge-discharge circuit includes: a parallel-off relay to switch ON and OFF transfer of electric power to and from the commercial power supply; and an apparatus-side relay provided between the charge-discharge circuit and the connector, and
the parallel-off relay is OFF and the apparatus-side relay is ON in the connection standby state.

4. The charge-discharge apparatus according to claim 2 or 3, wherein
the connection standby state maintaining unit transmits, through the communication control unit, a message indicative of a charge-discharge current value to the in-vehicle control device while keeping the relay of the charge-discharge circuit OFF, the charge-discharge current value being a value substantially equal to a lower limit by which charging or discharging is determined to be in progress.

5. The charge-discharge apparatus according to claim 4, wherein
the connection standby state maintaining unit determines whether a state of charge of the storage battery is equal to or higher than a predetermined first state of charge by which the storage battery is determined to be fully charged, and
if determining that the state of charge of the storage battery is equal to or higher than the first state of charge, the connection standby state maintaining unit transmits, to the in-vehicle control device, a message indicative of a discharge current value by which discharging is determined to be in progress.

6. The charge-discharge apparatus according to claim 4, wherein
the connection standby state maintaining unit determines whether the state of charge of the storage battery is equal to or lower than a predetermined second state of charge by which the state of charge of the storage battery is determined to be at its lower limit, and
if determining that the state of charge of the storage battery is equal to or higher than the second state of charge, the connection standby state maintaining unit turns ON the relay of the charge-discharge circuit and charges the storage battery with electric power from the commercial power supply until the state of charge of the storage battery reaches a predetermined third state of charge, and the connection standby state maintaining unit transmits a message indicative of a charge current value to the in-vehicle control device.

7. The charge-discharge apparatus according to any one of claims 1 to 6, comprising an output unit that outputs text, light on/off, blinking, or sound indicative of the connection standby state while the control unit maintains the connection standby state.

8. The charge-discharge apparatus according to any one of claims 1 to 6, wherein
the connection standby state maintaining unit turns OFF the vehicle-side relay and disconnects the communication connection established by the communication unit when at least one of the following conditions is satisfied: whether a predetermined time has elapsed from a time when the connection standby state maintaining unit started maintaining the connection standby state; whether a state of charge of the storage battery is equal to or lower than a predetermined second state of charge by which the state of charge is determined to be at its lower limit; and whether the state of charge of the storage battery has fallen by a predetermined ratio or a higher ratio after the connection standby state maintaining unit has started maintaining the connection standby state.

9. The charge-discharge apparatus according to claim 1, comprising a charge-discharge circuit including a relay to switch ON and OFF transfer of electric power between the storage battery and a commercial power supply or a load, wherein
the connection standby state maintaining unit carries out charging or discharging with electric power set at its lower limit while keeping both of the vehicle-side relay and the relay of the charge-discharge circuit ON.

10. The charge-discharge apparatus according to any one of claims 1 to 9, comprising:
an upper control communication unit to transfer data to and from an upper control device that provides an instruction for charging or discharging of the storage battery in the vehicle; and
a determination unit to determine whether a transition is to be made to a protection state in accordance with: information on the storage battery obtained by the communication unit from the in-vehicle control device; and an instruction received by the upper control communication unit from the upper control device, the vehicle-side relay being protected in the protection state.

11. The charge-discharge apparatus according to claim 10, wherein
in the protection state, no response is made to a charging instruction or a discharging instruction from the upper control device, or a negative response is returned to the instruction.

12. A charging and discharging control method by which a charge-discharge apparatus including a connector with an in-vehicle power line for connection with a storage battery provided in a vehicle controls charging and discharging of the storage battery, the charge-discharge apparatus performing the steps of:
establishing a communication connection with an in-vehicle control device that switches ON and OFF a vehicle-side relay disposed on the in-vehicle power line;
transmitting and receiving messages to and from the in-vehicle control device in accordance with a predetermined sequence; and
maintaining a connection standby state while neither charging nor discharging of the storage battery is carried out after the vehicle-side relay is switched ON in accordance with the predetermined sequence, the vehicle-side relay being kept ON in the connection standby state.

13. A computer program for a computer installed on a charge-discharge apparatus including: a connector with an in-vehicle power line for connection with a storage battery provided in a vehicle; and a communication unit to establish a communication connection with an in-vehicle control device that switches ON and OFF a vehicle-side relay disposed on the in-vehicle power line, the computer program causing the computer to perform the steps of:
transmitting and receiving messages to and from the in-vehicle control device through the communication unit in accordance with a predetermined sequence; and
maintaining a connection standby state while neither charging nor discharging of the storage battery is carried out after the vehicle-side relay is switched ON in accordance with the predetermined sequence, the vehicle-side relay being kept ON in the connection standby state.
